# FASCICULE DE BREVET EUROPEEN

(11) **EP 3 304 225 B1**
(45) Date de publication et mention de la délivrance du brevet: **06.10.2021**
(21) Numéro de dépôt: 16741059.6
(22) Date de dépôt: 03.06.2016
(51) Int. Cl.: G05B 19/042, G05B 15/02, H04L 12/28

(54) **PROCÉDÉ DE GÉNÉRATION DE MODULE DE CODE LOGICIEL CONDITIONNEL**
VERFAHREN ZUR ERZEUGUNG EINES MODULS MIT BEDINGTEM SOFTWARECODE
METHOD FOR GENERATING A CONDITIONAL SOFTWARE CODE MODULE

(30) Priorité: 04.06.2015 FR 1555076
(43) Date de publication de la demande: 11.04.2018
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2016/051328
(87) Numéro de publication internationale: WO 2016/193636

(56) Documents cités:
- EP-A1- 2 814 207
- US-A1- 2002 133 581
- US-A1- 2009 072 991
- US-A1- 2010 004 763

## Description

La présente invention concerne un procédé de génération de code logiciel pour le contrôle d'une installation domotique, un procédé de configuration, de commande et/ou de supervision d'une installation domotique.

Il est connu de procéder à la commande et/ou à la supervision d'une installation domotique par l'intermédiaire d'une multiplicité de protocoles de communication.

Ainsi, la liste non-exhaustive des protocoles à prendre en compte pour la commande et/ou la supervision d'une installation comprend : Z-Wave, EnOcean, IO Homecontrol, Somfy RTS, KNX, MODBUS, Wavenis, Philips HUE ainsi que d'autres protocoles propriétaires.

Les protocoles utilisés de façon courante présentent des différences importantes. En particulier, les différents protocoles peuvent prévoir des mécanismes de partition logique des dispositifs qui sont différents. Ainsi, un dispositif physique avec de multiples fonctions peut être modélisé comme un dispositif logique unique ou une pluralité de dispositifs logiques.

Un dispositif peut se trouver, selon son type, dans différents états. A titre d'exemple, un état peut correspondre à la marche ou à l'arrêt pour un interrupteur, ou à un degré ou pourcentage d'ouverture pour un volet. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Les dispositifs sont aptes à interpréter et exécuter des commandes. La description des commandes de dispositif peut être générique ou spécialisée, les identifiants des commandes pouvant être numériques ou alpha numériques. Les commandes peuvent présenter des paramètres, dont les valeurs peuvent utiliser des formats ou des échelles personnalisées ou propriétaires.

Les protocoles de communication locaux utilisés peuvent être monodirectionnels, bidirectionnels sous forme d'échange requête/réponse ou de double échange monodirectionnel utilisant une approche évènementielle. Ces protocoles utilisent un format propriétaire, usuellement binaire.

Ainsi, le manque de normalisation dans les protocoles de communications locaux de dispositifs rend difficile la commande à distance et le contrôle supervision d'installations domotiques hétérogènes.

Il est connu de l'art antérieur, notamment par la demande de brevet EP 2 814 207, un procédé de commande d'un appareil de communication pour interconnecter une pluralité de dispositifs utilisant de multiples protocoles.

La présente invention a pour but de résoudre tout ou partie des inconvénients mentionnés ci-dessus.

A cet effet, la présente invention concerne un procédé de génération d'un module de code logiciel conditionnel destiné au contrôle d'au moins une installation domotique d'un bâtiment, l'installation domotique comprenant une pluralité de dispositifs domotiques, chaque dispositif domotique étant représenté par au moins une instance de modèle de dispositif générique et au moins une instance de modèle de dispositif de bas niveau; le procédé étant exécuté par une unité de gestion connectée à l'au moins une installation domotique et est défini selon la revendication 1.

Grâce aux dispositions selon l'invention, il est possible d'obtenir une génération simple d'un module de code logiciel conditionnel. Cette génération ne nécessite pas l'utilisation d'une grammaire ou de traitement syntaxiques complexes. Il convient simplement de procéder à un assemblage de fragments de code correspondant aux règles de conversion sélectionnés, et à la collecte des valeurs correspondant aux instances sélectionnées.

Un module de code logiciel conditionnel comporte un programme ou une portion de programme qui associe au moins une action, comme par exemple l'envoi d'une commande à effectuer par le dispositif domotique et/ou l'envoi d'une notification à un utilisateur ou à une application s'exécutant sur l'unité de gestion, ou encore une demande de lancement d'un scénario prédéfini, à la réalisation d'une condition sur une ou plusieurs variables états. Une programmation des conditions et des actions associées pour les modèles génériques permet de réaliser cette programmation de manière uniforme pour toutes les installations. De cette façon, il est possible de procéder à la génération d'un module de code logiciel conditionnel destiné au contrôle de l'installation domotique de façon uniforme quel que soit le protocole de communication ou de commande local utilisé pour commander les dispositifs domotiques.

Le modèle générique de dispositif est un modèle indépendant du protocole permettant de décrire les dispositifs du bâtiment de façon fonctionnelle.

En utilisant les règles de conversion d'état, il est possible d'évaluer une expression conditionnelle générique sur une ou plusieurs variables d'état génériques en fonction des valeurs des variables d'état de bas-niveau.

En particulier, la transformation d'une valeur de variable de bas niveau en valeur de variable d'état générique est réalisée en utilisant une expression de langage de programmation comprenant au moins une règle de conversion d'état. Il est ensuite possible de procéder à l'évaluation de l'expression conditionnelle générique elle-même en fonction des valeurs des variables d'état génériques.

L'évaluation de cette condition dans le langage commun peut être réalisée soit sur une unité de gestion, comme un serveur, soit sur une unité centrale d'une installation domotique après téléchargement sur cette unité. En effet, les unités centrales de commande distantes voient seulement des expressions génériques pré-traduites et n'ont pas besoin d'éléments du modèle de référence ou de l'implémentation de la couche d'abstraction pour interpréter le module.

Selon un aspect de l'invention, lors de l'étape vi du procédé, la détermination d'un type de variable d'état de bas-niveau peut être réalisée sur la base d'une instance de variable de bas-niveau. Alternativement ou de façon complémentaire, lors de l'étape iv, la détermination d'une instance de variable de bas-niveau peut comprendre la détermination d'un type de variable d'état de bas-niveau associé.

Il est à noter que l'on entend par dispositif domotique un équipement domotique et/ou un capteur, ou encore une partie d'équipement domotique ou une partie de capteur correspondant à un sous-ensemble fonctionnel.

Par ailleurs, on entend par message un élément d'information notifié ou réceptionné sous la forme d'un appel synchrone ou asynchrone à l'unité de gestion, pouvant également correspondre à un appel de fonction local ou distant.

Par action, il est entendu notamment déclenchement de l'exécution d'une commande générique ou de bas-niveau relative à un moins un dispositif domotique ou envoi d'une notification, ou encore le déclenchement d'un scénario prédéfini ou de l'exécution d'un groupe de commande préalablement envoyées à l'unité de commande, en vue de leur exécution par un ou plusieurs dispositifs domotiques. Dans ce dernier cas, l'action comprend l'envoi d'un identifiant du scénario prédéfini ou du groupe de commandes préalablement envoyé.

Selon un aspect de l'invention, chaque instance de modèle de dispositif générique comprend une indication d'appartenance à une classe ou un type de modèle de dispositif générique.

Selon un aspect de l'invention, chaque instance de modèle de dispositif de bas- niveau comprend une indication d'appartenance à une classe ou un type de modèle de dispositif de bas-niveau.

Selon un aspect de l'invention, chaque instance de modèle de dispositif de bas- niveau comprend une indication d'un type de protocole de communication local reconnu par le dispositif domotique.

Le traitement des informations stockées dans ce modèle de bas niveau pour un dispositif donné implique une connaissance du protocole particulier et du format de données pour ce dispositif. Selon un aspect de l'invention, ce modèle peut présenter un format de structure commun pour les différents types de dispositifs de bas-niveau, mais les types des attributs, des variables d'états et des commandes définies dans ce modèle ne sont pas génériques.

La conversion entre le modèle générique et le modèle de bas-niveau est opérée sur la base d'un ensemble de règles de conversion de modèle prédéfinies, qui sont notamment enregistrées sur l'unité de gestion et permettent de fournir une abstraction des dispositifs pour les applications ou les utilisateurs.

Selon un aspect de l'invention, l'unité de gestion est un serveur connecté à distance à l'au moins une installation domotique, par l'intermédiaire d'un réseau étendu.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Selon un aspect de l'invention, la sélection d'une règle de conversion d'état en fonction de la variable d'état de bas niveau est réalisée sur la base du type de la variable d'état et du type de dispositif de bas-niveau.

Selon un aspect de l'invention, les règles de conversion d'état sont stockées en association avec les données suivantes :
- un identifiant ou un nom de variable générique ;
- un type de dispositif générique ;
- un identifiant ou un nom de variable de bas niveau ;

Selon un aspect de l'invention, une règle de conversion d'état définit la correspondance entre un identifiant d'une variable d'état de bas niveau et un identifiant d'une variable d'état générique, ainsi que une règle de conversion entre la valeur d'une variable d'état de bas-niveau et une valeur d'une variable d'état générique.

Selon un aspect de l'invention, le procédé comprend une étape de mise à jour de la valeur de la variable d'état de bas-niveau et de stockage de cette valeur.

Selon un aspect de l'invention, les instances de modèle de dispositif générique sont seulement partiellement mémorisées de façon persistante. Les valeurs des variables d'états génériques sont recalculées à partir des données des instances de modèles de bas-niveau sur la base des règles de conversion d'état.

Selon un aspect de l'invention :
- l'au moins une action comprend une commande générique relative à un moins un dispositif domotique,
le procédé comprend en outre l'étape suivante :
vbis - Sélection optionnelle d'une règle de conversion de commande convertissant l'au moins une commande générique en au moins une commande de bas-niveau en fonction de l'au moins une commande générique ou de son nom et du type de dispositif de bas-niveau ;
et l'étape vi de génération comprend en outre une sous-étape suivante :
   d. génération optionnelle d'au moins un quatrième fragment de code logiciel pour la définition de commandes de bas-niveau
   correspondant à des commandes génériques définies dans l'expression conditionnelle générique sur la base d'une règle de conversion de commande sélectionnée à l'étape vbis, la règle de conversion étant exprimée sous forme de fragment de code ou d'expression d'un langage interprétable, ou à l'envoi d'une notification.

Grâce à ces dispositions, le module de code logiciel conditionnel contient à la fois les éléments permettant d'évaluer l'expression conditionnelle générique, mais également les éléments permettant de déclencher l'exécution des commandes génériques après l'évaluation de l'expression conditionnelle générique, en fonction du résultat de l'évaluation. Cet aspect est particulièrement utile pour réaliser des fonctions de régulation, dans lesquels le choix des commandes, éventuellement les valeurs de paramètres associés aux commandes sont définis en fonction des valeurs des variables génériques. Ces valeurs sont évaluées au moment de l'exécution.

Selon un aspect de l'invention, les règles de conversion de commande sont stockées en association avec les données suivantes :
- un type de dispositif de bas-niveau;
- un nom ou identifiant de commande générique.

Selon un aspect de l'invention, la sélection de la règle de conversion de commande est réalisée en utilisant le type de protocole de communication local et le nom ou identifiant de la commande générique.

Selon un aspect de l'invention, la sélection de la règle de conversion d'expression est réalisée en utilisant le type de protocole de communication local et le nom ou identifiant de la commande générique.

Selon un aspect de l'invention, au moins un fragment de code logiciel parmi l'au moins un premier, deuxième, troisième et/ou quatrième fragment de code logiciel est exprimé sous forme :
- d'un fragment de code source de langage de programmation compilable ; ou
- d'un fragment de code précompilé pour une machine virtuelle implémentée sur l'unité centrale de commande ou l'unité de gestion destinée à exécuter le code logiciel conditionnel ; ou
- d'un fragment de code en langage de programmation interprétable pour un module logiciel complémentaire, dit interpréteur, sur l'unité centrale de commande ou l'unité de gestion destinée à exécuter le code logiciel conditionnel ; ou
- d'un fragment de code binaire, correspondant à une suite d'instructions en langage machine compilé par l'unité de gestion pour un processeur cible, destiné à exécuter ledit fragment de code binaire.

Selon la dernière possibilité, les caractéristiques du processeur doivent être connues à l'avance pour pouvoir exécuter ce fragment de code logiciel, l'entité qui exécute le code, par exemple l'unité de commande, et l'unité de gestion disposant d'une interface de programmation permettant l'appel du fragment de code généré.

Selon un aspect de l'invention, l'au moins un troisième fragment de code logiciel pour l'évaluation de l'expression conditionnelle générique comprend une copie au moins partielle d'une condition comprise dans l'expression conditionnelle générique.

Selon un aspect de l'invention, le procédé comprend une phase de contrôle d'au moins une installation domotique d'un bâtiment, et comprenant les étapes suivantes :
i. Déclenchement de l'éxécution d'un module de code logiciel conditionnel agencé pour évaluer une expression conditionnelle générique.
ii. Collecte d'au moins une valeur de variable de bas niveau identifiée dans le module de code logiciel conditionnel.
iii. Conversion de l'au moins une valeur de variable d'état de bas niveau en au moins une valeur de variable d'état générique sur la base d'au moins une règle de conversion d'état intégrée dans le module de code logiciel conditionnel sous forme de fragment de code ;
iv. Evaluation de l'expression conditionnelle générique sur la base de l'au moins une valeur de l'au moins une variable d'état générique obtenue à l'étape iii.

Grâce aux dispositions selon l'invention, l'exécution du module de code logiciel conditionnel peut être réalisée sur une unité de gestion ou une unité centrale de commande d'une installation domotique. Dans le cas où l'exécution est réalisée sur une unité centrale de commande d'une installation domotique, cela permet une distribution de la charge de calcul entre les éléments du système domotique.

Selon deux aspects de l'invention, l'étape de déclenchement peut être initiée soit de manière périodique à l'expiration d'un compteur de temps, soit sur la détection d'un évènement du type changement de valeur de l'au moins une variable d'état de bas niveau.

Selon un aspect de l'invention, le module de code logiciel conditionnel comprend
a. au moins un premier fragment de code logiciel pour la collecte d'au moins une valeur de variable de bas niveau ;
b. au moins un deuxième fragment de code logiciel pour la conversion de l'au moins une valeur de l'au moins une variable d'état de bas niveau nécessaire à l'évaluation de l'expression conditionnelle générique en au moins une valeur de variable d'état générique sur la base d'au moins une règle de conversion d'état ;
c. au moins un troisième fragment de code logiciel pour l'évaluation de l'expression conditionnelle générique en fonction de l'au moins une valeur de l'au moins une variable d'état générique ;
d. et optionnellement au moins un quatrième fragment de code logiciel pour la définition de commandes de bas-niveau correspondant à des commandes génériques définies dans l'expression conditionnelle générique sur la base d'une règle de conversion de commande ;

au moins un fragment de code logiciel parmi l'au moins premier, deuxième, troisième et/ou quatrième fragment de code logiciel est exprimé sous forme de langage de programmation interprétable, l'unité de gestion connectée à l'au moins une installation domotique ou l'unité centrale de commande de l'installation domotique exécutant le procédé étant également agencée pour exécuter un module logiciel interpréteur.

Selon un autre aspect de l'invention, au moins un fragment de code logiciel est exprimé sous forme de code précompilé pour une machine virtuelle, et, dans une étape préalable, un chargement du module de code logiciel conditionnel est réalisé dans une machine virtuelle exécutée sur l'unité de gestion connectée à l'au moins une installation domotique ou sur l'une unité centrale de commande de l'installation domotique exécutant le procédé, le module de code logiciel conditionnel correspondant à une expression conditionnelle générique.

Selon un aspect de l'invention, le procédé est exécuté par une unité de gestion connectée à l'au moins une installation domotique et comprend en outre les étapes suivantes :
v. Evaluation d'un résultat de l'expression conditionnelle générique GCE et décision d'exécuter ou non une action ; puis, si la condition définie est satisfaite :
vi. Envoi d'un message de commande à destination de l'unité centrale de commande correspondant à au moins une commande de bas niveau correspondant à au moins une commande générique définie dans l'expression conditionnelle générique sur la base d'au moins une règle de conversion de commande ; et/ou
vii. Envoi d'au moins une notification sous forme d'un message de notification à destination d'un utilisateur ou d'une application.

Selon une variante du procédé décrit ci-dessus, dans le cas de l'envoi d'une commande de bas niveau correspondant à une commande générique, il est possible que la conversion de la commande générique ne soit pas réalisée lors du procédé de génération. Dans ce cas, un procédé de commande prenant en compte cette conversion peut être utilisé.

Selon un aspect de l'invention, le procédé de contrôle est exécuté par l'unité centrale de commande, et comprend en outre une étape d'envoi à destination de l'unité de gestion d'un message comprenant le résultat de l'étape iv d'évaluation de l'expression conditionnelle générique sur la base de l'au moins une valeur de l'au moins une variable d'état générique.

Ces dispositions permettent de réaliser l'exécution par une unité centrale de commande afin de préserver les ressources en temps de traitement d'une unité de gestion telle que le serveur.

Selon un aspect de l'invention, le procédé de contrôle selon l'une des revendications précédentes, dans lequel le procédé est exécuté sur une unité de gestion connectée à l'installation domotique, et dans lequel l'étape ii de collecte d'au moins une valeur de variable de bas niveau est réalisée en utilisant un référentiel ou base de données d'instances accessible à l'unité de gestion.

Selon un autre aspect de l'invention, le procédé de contrôle selon l'une des revendications précédentes, dans lequel au moins les étapes i à iv du procédé sont exécutées sur l'unité centrale de commande de l'installation domotique, et dans lequel l'étape ii de collecte d'au moins une valeur de variable de bas niveau est réalisée en utilisant des valeurs stockées dans la mémoire de ladite unité centrale de commande.

Selon un aspect de l'invention, l'étape de collecte utilise une fonction qui présente dans ses paramètres des éléments d'identification, à savoir notamment un identifiant de variable générique, un type de protocole utilisé, ces éléments d'identification pouvant être complétés par une indication d'un identifiant de l'unité électronique de commande.

Un aspect ne faisant pas partie de l'invention concerne un procédé de configuration d'au moins une installation domotique d'un bâtiment, l'installation domotique comprenant une pluralité de dispositifs domotiques, chaque dispositif domotique étant représenté par au moins une instance de modèle de dispositif générique et au moins une instance de modèle de dispositif de bas niveau; le procédé est exécuté préalablement à l'exécution du procédé de génération de code par une unité de gestion connectée à l'au moins une installation domotique et comprenant les étapes suivantes :
i. réception d'un message de configuration émis à partir d'une unité centrale de commande d'une installation domotique ou d'un terminal utilisateur, le message contenant une indication d'une mise en service , d'une configuration ou d'une reconfiguration d'un dispositif domotique.
ii. détermination d'au moins une classe ou type de modèle de dispositif de bas-niveau correspondant au dispositif domotique ;
iii. création d'au moins une instance de modèle de dispositif de bas-niveau en fonction de la classe ou type de dispositif de bas-niveau définie à l'étape ii et correspondant au dispositif domotique.
iv. détermination d'une conversion de modèle convertissant un type ou classe de dispositif de bas niveau en au moins une classe ou type de modèle de dispositif générique sur la base d'une règle de conversion de modèle sélectionnée en fonction de l'instance de modèle de dispositif bas-niveau déterminée à l'étape iii ou de son type.
v. création d'au moins une instance de modèle de dispositif générique pour l'au moins une instance de modèle de dispositif de bas-niveau sur la base de l'au moins un type ou classe correspondant à la conversion de modèle déterminé à l'étape iv.

Selon un aspect de l'invention, on procède à un enregistrement des instances de modèles de dispositifs génériques de façon associée avec l'instance de modèle de dispositif de bas-niveau.

Selon un aspect de l'invention, les règles de conversion de modèle sont stockées sous forme d'une association entre :
- un type de dispositif de bas-niveau ; et
- au moins un type ou classe de dispositif générique correspondant.

La présente invention concerne également un produit programme d'ordinateur comprenant des instructions de code selon la revendication 6.

La présente invention concerne également un système comprenant une unité de gestion selon la revendication 7.

Les différents aspects définis ci-dessus non incompatibles peuvent être combinés.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant un système d'abstraction des dispositifs domotiques.
La figure 4 est un schéma représentant un modèle de dispositif de bas niveau.
La figure 5 est un schéma représentant un modèle de dispositif générique
La figure 6 est un schéma illustrant un mode de mise en œuvre d'un procédé de configuration d'une installation domotique selon l'invention.
La figure 7 est un schéma illustrant un mode de mise en œuvre d'un procédé de génération de code selon l'invention ;
La figure 8 est un schéma illustrant un mode de mise en œuvre d'un procédé de contrôle d'une installation domotique selon l'invention, exécuté sur une unité de gestion connectée à une unité centrale de commande d'une installation domotique.
La figure 9 est un schéma illustrant un mode de mise en œuvre d'un procédé de mise à jour d'une base de données d'instance selon l'invention.
La figure 10 est un schéma illustrant un mode de mise en œuvre d'un procédé de commande selon l'invention.
La figure 11 est un schéma illustrant mode de mise en œuvre d'un procédé de contrôle d'une installation domotique selon l'invention, exécuté sur une unité centrale de commande d'une installation domotique.

Dans la description détaillée qui va suivre des figures définies ci-dessus, les mêmes éléments ou les éléments remplissant des fonctions identiques pourront conserver les mêmes références de manière à simplifier la compréhension de l'invention.

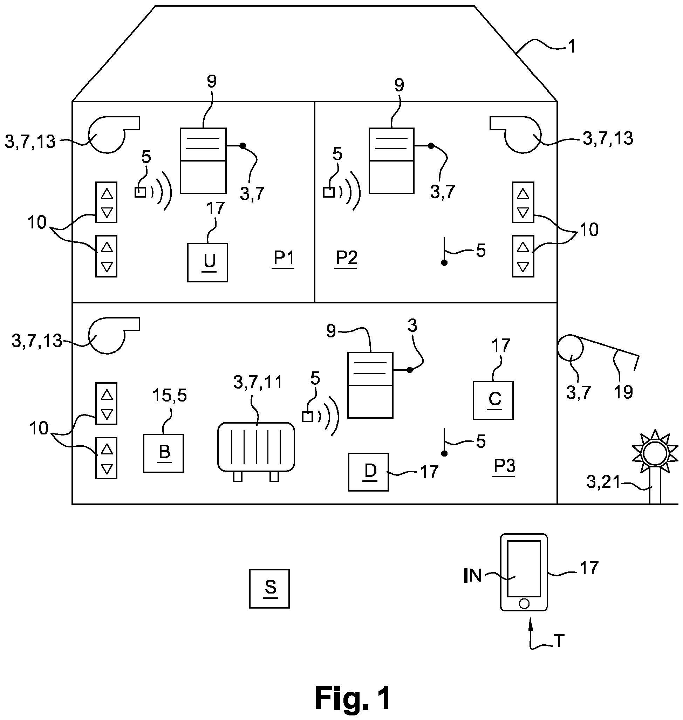

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, ou encore un système d'alarme.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

L'installation domotique 17 comprend une unité centrale de commande U agencée pour commander et/ou contrôler l'ensemble ou une partie des équipements domotiques 3 à distance, notamment en utilisant un protocole de communication sans fil, par exemple un protocole de communication radio. L'unité centrale de commande est agencée pour regrouper l'ensemble des données en provenance des équipements domotiques 3 et pour traiter ces données.

Les dispositifs appartiennent à un réseau local au sein de l'installation domotique et communiquent selon un protocole de communication local. Ils ont une adresse locale dans ce réseau. Les dispositifs logiques peuvent être modélisés comme des nœuds ou points d'extrémité dans le réseau local.

Le système d'adressage local peut être hiérarchique ou à plat, le format d'adresse pouvant être numérique ou alphanumérique.

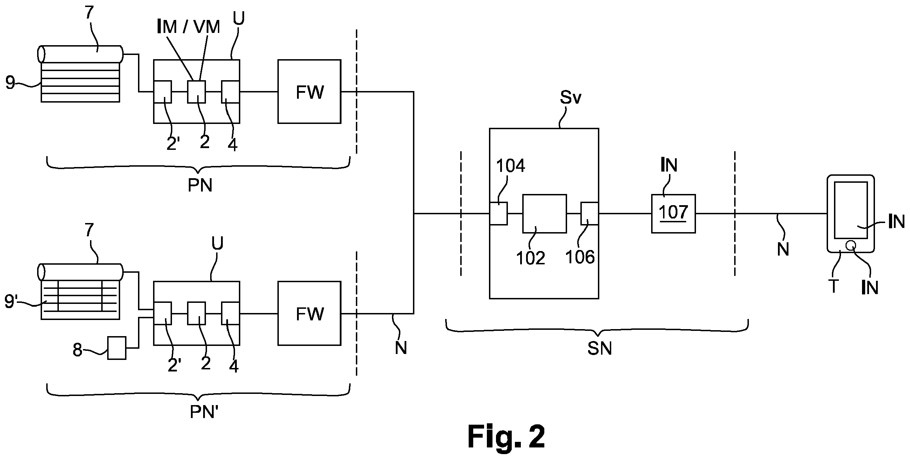

Comme cela est représenté sur la figure 2, l'unité centrale de commande U est agencée pour communiquer avec un serveur Sv.

L'unité centrale de commande U est disposée sur un réseau privé PN, PN', dont l'accès est en général protégé par un pare-feu FW. Le serveur Sv est également disposé sur un réseau privé SN. Le réseau privé PN est relié à un réseau étendu N, par exemple Internet.

En particulier, l'unité centrale de commande U de l'installation domotique 17 comprend une unité de traitement 2 agencée pour contenir et exécuter un premier programme d'ordinateur. La figure 2 représente deux unités centrales de commande U disposées sur deux réseaux privés correspondant à différentes installations domotiques. Bien entendu, le serveur Sv est agencé pour communiquer avec un ensemble de telles unités centrales de commande U. Nous décrirons par la suite une de ces unités.

A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21 ou un système d'alarme.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en œuvre par exemple un ou plusieurs des protocoles Z-Wave, EnOcean, IO Homecontrol, Somfy RTS, KNX, MODBUS, Wavenis, Philips HUE.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencées pour contenir et exécuter un deuxième programme d'ordinateur.

Le serveur Sv comprend, en outre, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

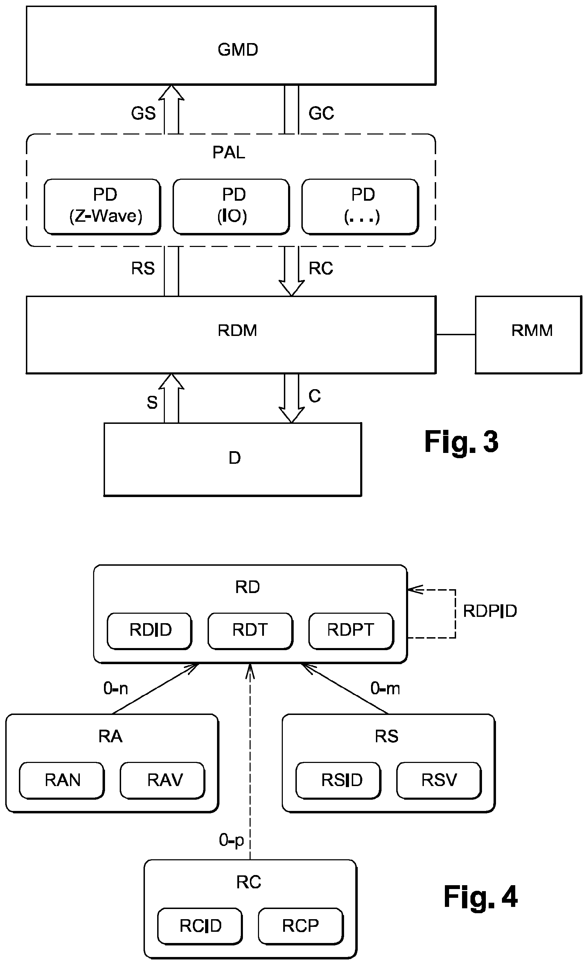

Selon un aspect de l'invention, et comme cela est représenté sur la figure 3, l'unité de traitement du serveur 102 est agencée pour mettre en œuvre un système d'abstraction destinée à la commande et/ou au contrôle des dispositifs, équipements domotiques ou capteurs. Par la suite nous utiliserons la désignation de dispositif D indifféremment pour désigner des capteurs ou des équipements domotiques, ou encore des parties d'équipements domotiques 3 ou de capteurs 5.

Comme cela est représenté sur la figure 3, le système d'abstraction proposé met en œuvre :
- Une pluralité de modèles de dispositifs de bas-niveau RDM destinés au stockage d'informations dans un format spécifique d'un protocole sur un dispositif réel D donné, un seul modèle étant représenté sur la figure 3 ;
- Une pluralité de modèles de dispositifs génériques de haut-niveau GDM permettant la description des dispositifs réels D, de leurs états S et des commandes C d'une façon indépendante du protocole, un seul modèle étant représenté sur la figure 3 ; et
- Une pluralité de pilotes de protocoles PD qui mettent en œuvre les conversions nécessaires pour passer d'un modèle à l'autre et forment une couche d'abstraction de protocole PAL.

Comme cela est représenté sur la figure 4, le modèle de dispositif de bas niveau permet le stockage d'information sur les dispositifs et leur état, dans un format proche de leur format natif de protocole de communication.

Le traitement des informations stockées dans ce modèle pour un dispositif donné implique une connaissance du protocole particulier et du format de données pour ce dispositif. Selon un aspect de l'invention, ce modèle peut présenter un format de structure commun pour les différents types de dispositifs de bas-niveau, mais les types des attributs, des variables d'états et des commandes définies dans ce modèle ne sont pas génériques.

Chaque instance RD d'un modèle de bas niveau RDM correspond à un nœud adressable dans le réseau local auquel il appartient et dans lequel il communique selon le protocole cible. Le nœud agit comme une terminaison. Un tel nœud peut correspondre à un dispositif physique, une partie d'un dispositif (un sous-ensemble fonctionnel).

Une instance RD d'un modèle de bas-niveau comprend :
- Un identifiant de l'instance de modèle de bas niveau RDID, qui peut comprendre en particulier une adresse de terminaison dans le réseau local.
- Un type ou une classe de dispositif RDT ;
- Un type de protocole RDPT utilisé dans le réseau local.

L'identifiant RDID ou adresse est utilisée comme une adresse de communication ou comme un chemin de routage. Cette adresse est unique, au moins dans le réseau local auquel appartient le dispositif D.

L'information de type RDT peut être obtenue directement du dispositif domotique D, mais il est peut être nécessaire d'utiliser des tables de référence externes ou même une information fournie par un utilisateur pour connaître le type de dispositif exact. Dans le cas où cette information est demandée à l'utilisateur, cette information RDT peut être demandée une unique fois à l'utilisateur lors de la phase de configuration/appairage du produit et ensuite stockée dans l'instance RD, en particulier dans la base IDB qui sera décrite ultérieurement.

Par ailleurs, chaque instance de modèle de bas niveau RD peut présenter :
- Un ou plusieurs attributs RA ;
- Une ou plusieurs variables d'états RS ;

Un attribut RA est notamment défini par un nom d'attribut RAN et par une valeur RAV. Les attributs RA représentent par exemple des informations additionnelles de type et/ou de configuration obtenues par exemple pendant la phase d'appairage. Les attributs sont notamment des informations invariables après l'appairage.

Une variable d'état RS est notamment définie par un identifiant unique RSID dans la portée du modèle de dispositif de bas-niveau RDM considéré, et par une valeur RSV. Les instances de modèles de dispositifs de bas niveau RD présentant des variables d'états RS peuvent autoriser des requêtes sur leur état et/ou envoyer des notifications lorsque la valeur de la variable d'état RSV change.

Une instance de modèle de dispositif de bas niveau RD peut également comporter une adresse parente RDPID. L'adresse parente RDPID permet aux instances de modèles de dispositif de bas niveau RD du même protocole d'être organisés en un arbre de nœuds hiérarchique. Cela est utile pour les protocoles dans lequel la topologie hiérarchique est nécessaire au routage des informations vers les nœuds, ou dans le cas où un dispositif ne peut pas exister sans parent.

Ainsi, l'ensemble des instances RD d'une installation 17 peut former une liste ou un arbre de nœuds, dans le cas d'une topologie hiérarchique, suivant les protocoles utilisés.

Comme cela est indiqué sur la figure 3, un méta-modèle de référence RMM est maintenu pour stocker des informations communes sur les modèles de dispositif de bas niveau RDM, leurs variables d'états RS et les commandes attachées RC, à savoir :
- Les types de dispositifs de bas niveau RDT supportés et leurs noms ;
- Les variables d'états RS de bas niveau supportées avec leurs identifiants RSID et les types de données pour les valeurs RSV ;
- Les profils décrivant la relation entre les types de modèles de dispositif de bas niveau RDM et les valeurs de variables d'état RS autorisées.

Ce méta-modèle de référence RMM est partagé dans l'architecture pour permettre des vérifications d'intégrité et une gestion appropriée des valeurs de variables d'états RSV des instances de modèles de dispositifs de bas niveau RD lorsque la connaissance du type de données est nécessaire, sans besoin de stocker cette information pour chaque instance de modèle de dispositif de bas-niveau RD.

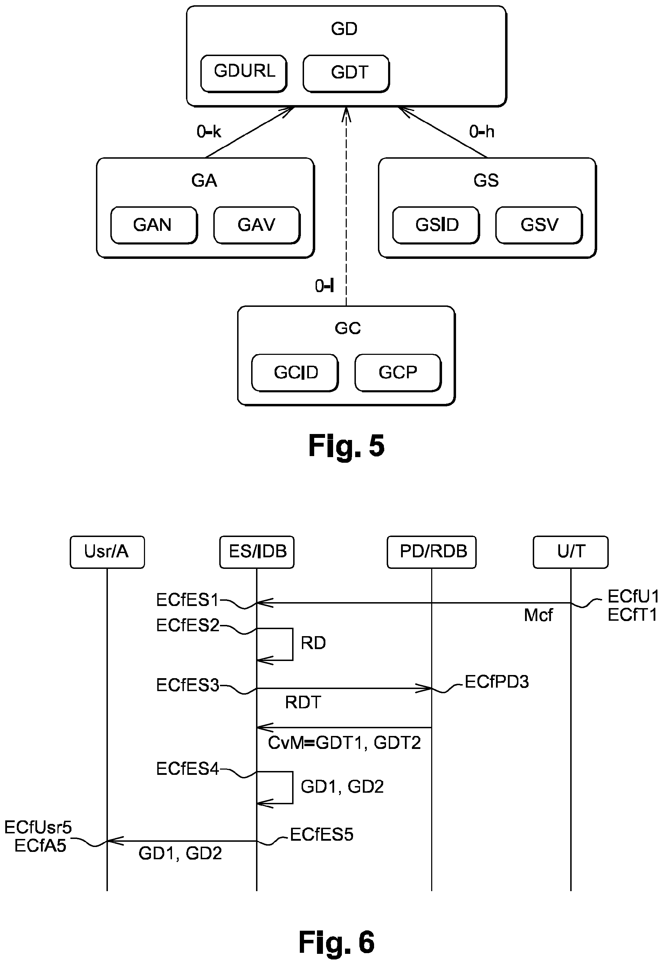

Comme cela est représenté sur la figure 5, le modèle de dispositif générique GDM est un modèle indépendant du protocole permettant de décrire les dispositifs du bâtiment de façon fonctionnelle.

En particulier, une instance de modèle de dispositif générique GD comprend :
- Un identifiant unique de l'instance de modèle générique GDURL, pouvant être constitué en particulier par un identifiant utilisant notamment une notation d'adresse indépendante du protocole, par exemple selon un format de type URL;
- Un type ou une classe de dispositif générique GDT ;

Par ailleurs, chaque instance de modèle générique GD peut présenter :
- Un ou plusieurs attributs GA ;
- Une ou plusieurs variables d'états GS .

Un attribut GA est notamment défini par un nom d'attribut GAN et par une valeur GAV. Les attributs GA représentent par exemple des informations additionnelles de type et/ou de configuration obtenues par exemple pendant la phase d'appairage.

Une variable d'état GS est notamment définie par un identifiant ou un nom unique GSID dans la portée du modèle de dispositif générique GDM considéré, et par une valeur GSV. Les instances de modèles de dispositif générique GD présentant des variables d'états GS peuvent autoriser des requêtes sur leur état et/ou envoyer des notifications lorsque la valeur de la variable d'état GSV change.

Une instance de modèle de dispositif générique GD peut posséder au moins une variable d'état GS. Cette variable d'état GS présente un identifiant ou nom d'état GSID explicite prédéfini par le modèle considéré, et une valeur de variable d'état GSV, sélectionnée parmi plusieurs valeurs prédéfinies ou appartenant à une plage de valeurs de variables d'état prédéfinie par le modèle considéré .

En outre, une instance de modèle de dispositif générique GD peut être associée à une ou plusieurs commandes génériques GC avec :
- un nom de commande explicite GCID ; et
- Un ou plusieurs paramètres normalisés GCP.

Les commandes supportées sont définies par le modèle de dispositif générique GDM.

Cette description est indépendante du protocole réel ou des détails d'implémentation d'un modèle de dispositif de bas niveau RDM sous-jacent.

A titre d'exemple, un volet roulant peut être modélisé par une instance de modèle de modèle de dispositif générique GD défini de la façon suivante :
- Classe ou Type GDT: « Volet Roulant Positionnable »/ (PositionableRollerShutter) ;
- Variable d'état GS : « Etat de fermeture »/(ClosureState) pouvant prendre des valeurs suivant une échelle normalisée de 0 à 100% ;
- Commande générique GC supportée : « réglage d'ouverture »/(SetClosure) avec un paramètre d'ouverture (amount) pouvant prendre des valeurs suivant une échelle normalisée de 0 à 100%.

Une instance de modèle de dispositif générique GD est implicitement reliée à au moins une instance de modèle de dispositif de bas niveau RD sous-jacente. En pratique, ce lien peut être modélisé par l'identifiant unique de l'instance de modèle générique GDURL qui correspond à une adresse de dispositif, et qui tient le rôle à la fois d'identifiant unique et de pointeur vers l'instance de modèle de dispositif de bas niveau RD sous-jacente. La réalisation du lien ou de la clé d'indexation sera détaillée ultérieurement.

Il est à noter que dans certains cas, une instance de modèle de dispositif de bas-niveau RD peut correspondre à plusieurs instances de modèles de haut-niveau GD.

Cela est notamment le cas en raison du fait que la couverture fonctionnelle d'un modèle de dispositif de bas niveau peut être différente suivant les protocoles considérés. Ainsi, un modèle de dispositif de bas niveau peut soit couvrir une fonction simple, soit de multiples fonctions d'un système complexe. A titre d'exemple, un système de chauffage peut couvrir fonctionnellement des commandes de marche/arrêt/réglage du chauffage qui correspondent à une première instance d'un modèle de dispositif générique GD de type « système de chauffage ». Ce système peut également comprendre un ou plusieurs capteurs de température, éventuellement localisés à des positions distinctes de l'installation domotique qui peuvent correspondre à des instances d'un autre modèle de dispositif générique GD relatif à un type ou une classe « capteur ».

Le système d'abstraction conçu permet de modéliser plusieurs instances de modèles de dispositif générique GD sur la base du même dispositif réel et de la même instance de modèle de dispositif de bas niveau RD sous-jacent.

Dans un tel cas, les instances de modèles de dispositifs génériques GD relatifs à la même instance de dispositif de bas niveau RD peuvent être appelées sous-systèmes.

Dans le cas où plusieurs dispositifs domotiques D sont groupés, dans leur protocole natif, par exemple dans le cas d'un ensemble de volets d'une façade d'un bâtiment, il est possible de créer une instance de modèle de dispositif de bas niveau virtuel RD, pour représenter le groupe dans un format proche de son protocole natif, puis de lier cette instance de modèle de dispositif de bas niveau virtuel RD à une ou plusieurs instances de modèle de dispositif génériques GD. De cette façon, il est possible de conserver une correspondance entre au moins une instance de modèle de dispositif générique GD et une instance de modèle de dispositif de bas-niveau RD.

La structure de l'identifiant unique d'une l'instance de modèle générique GDURL va être à présent décrite de façon correspondante à un mode de réalisation particulier.

Selon ce mode de réalisation, l'identifiant unique d'une instance de modèle générique GDURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe d'instances de modèles de dispositifs génériques GD associés à la même instance de modèle de dispositif de bas niveau RD sous-jacent. Les identifiants qui sont une expression unique d'une instance de modèle de dispositif de bas niveau GD ne présentent pas d'extension d'identification d'un sous-système.

Ainsi, la forme de l'identifiant unique d'une l'instance de modèle générique GDURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples:

### 1) knx://0201-0001-1234/1.1.3

Cet identifiant unique d'une l'instance de modèle de dispositif générique GDURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique d'une l'instance de modèle générique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des différentes instances de modèles de dispositif de bas niveau RD et de dispositif génériques GD sont réalisées par un processus ou service d'exécution ES. Afin de stocker les différentes instances de modèles mentionnées ci-dessus, le service d'exécution peut avoir accès à une base de données d'instances IDB. Bien entendu, ces différents types d'instances peuvent être stockées également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

Un mode de réalisation de la base de données IDB va à présent être décrit. Selon ce mode de réalisation, la base de données IDB peut contenir des tables organisées sous forme de tableaux. Chaque ligne correspond à une instance de modèle dispositif domotique, bas niveau RD ou générique GD, selon la table considérée. Les colonnes correspondent aux différents types d'information stockée.

Ainsi, une table RDTbl des instances de modèle de dispositif de bas niveau RD peut contenir des colonnes comprenant les données suivantes :
I - l'identifiant de l'unité centrale de commande U à laquelle un dispositif domotique est rattaché UID;
II - l'adresse du dispositif domotique dans le réseau local géré par l'unité centrale de commande RDID;
III - le type de protocole local utilisé RDPT;
IV - type de modèle de dispositif bas niveau RDT, correspondant par exemple à une désignation de volet roulant ou encore d'éclairage.

Une clé d'indexation RDK, unique pour chaque dispositif domotique, est utilisée. Cette clé d'indexation unique RDK peut être générée à partir des trois éléments I, II, III énumérés ci-dessus; elle peut être stockée dans chaque table. Une autre possibilité est d'utiliser comme clé d'indexation RDK un identifiant qui s'auto-incrémente au fur et à mesure de l'entrée des données dans la base IDB.

Selon encore une autre possibilité, la clé d'indexation RDK peut être calculée à chaque accès, en partant des éléments I, II, éventuellement III.

De façon générale, dans le cas où la clé d'indexation est calculée, ce calcul peut se baser sur des éléments d'identification. Les éléments d'identification combinés doivent permettre l'identification d'un unique dispositif domotique de bas-niveau RD.

A noter que les différents éléments d'identification, pris individuellement, ne sont pas nécessairement uniques pour chaque dispositif mais la combinaison de deux ou plusieurs éléments d'information doit l'être. L'identifiant UID de l'unité centrale de commande U à laquelle le dispositif domotique D est rattaché ou l'adresse RDID du dispositif domotique, ou éventuellement celle de son parent dans un système d'adressage hiérarchique dans le réseau local géré par l'unité centrale de commande U sont des exemples d'éléments d'identification évoqués ci-dessus.

Ces deux éléments sont suffisants pour une identification sans ambigüité du dispositif domotique. D'autres éléments d'identification peuvent être utilisés, par exemple le type de protocole local utilisé par le dispositif. Cet élément supplémentaire d'identification permet la sélection rapide des instances RD, GD concernées, et du pilote de protocole PD à exécuter, étant donné qu'un pilote de protocole PD est spécifique d'un type de protocole natif.

Il est à noter que, dans le cas où la clé d'indexation est calculée à chaque accès, les mêmes informations peuvent être présentes dans des éléments d'identification sous des formats différents.

Un exemple de ligne de table RDTbl est reproduit ci-dessous.

| UID | RDID | RDPT | RDT |
|---|---|---|---|
| 0201-0001-1234 | 120403 | IO | 0x0100202 |

Cette ligne correspond à une table dans laquelle la clé d'indexation RDK est calculée et non stockée, pour un dispositif reliée à une unité centrale de commande portant l'identifiant 0201-0001-1234, le dispositif étant identifié par son adresse radio IO 120403 sur le réseau local IO, le type de protocole local utilisé étant IO homecontrol, le type de modèle de dispositif de bas niveau étant 0x0100202, ce qui correspond selon une implémentation à un volet roulant avec gestion de basse vitesse du fabricant SOMFY.

D'autres informations, comme le nom des variables d'état RSID, les valeurs des variables d'états RSV, des indicateurs binaires (VRAI/FAUX) pour des commandes en cours d'exécution, etc., peuvent être stockées dans des tables différentes ou dans la même table. Si des tables différentes sont utilisées, la clé d'indexation unique RDK pour chaque instance de modèle de dispositif de bas-niveau RD assure la correspondance entres les informations stockées et le dispositif concerné.

Une table GDTbl des instances de modèle de dispositif générique GD peut comprendre des colonnes comportant les données suivantes :
I - l'identifiant unique d'une l'instance de modèle générique GDURL;
II - la classe ou type de dispositif générique GDT.

Ainsi, un exemple de ligne de table GDTbl, correspondant à l'exemple précédemment illustré de ligne de table RDTbl est reproduite ci-dessous.

| GDURL | GDT |
|---|---|
| io://0201-0001-1234/120403 | RollerShutterWithLowSpeedSupport |

Cette ligne est relative à une instance de modèle de dispositif générique GD correspondant à l'instance de modèle de dispositif de bas-niveau RD représentée dans l'exemple de table RDTbl représentée précédemment.

D'autres informations, comme le nom des variables d'état GSID, les valeurs des variables d'états GSV peuvent être stockées dans des tables différentes ou dans la même table. Il peut être intéressant d'associer d'autres informations aux instances de modèles de dispositifs génériques, comme un nom, une localisation physique du dispositif D dans l'installation. Toutefois, ces informations ne peuvent pas nécessairement être détectées et sont typiquement définies par l'installateur ou l'utilisateur.

Une clé d'indexation unique GDK, représentant un dispositif domotique donné, peut être stockée dans la table.

Comme pour la table des instances de bas niveau, la clé d'indexation peut être calculée à chaque accès. Pour l'accès à la table des instances de modèle générique, il peut être utile de calculer cette clé GDK à partir de l'identifiant GDURL, par exemple en utilisant directement cet identifiant comme clé.

Les instances de modèles bas niveau RD et générique GD sont calculées et/ou stockées avec la même valeur de clé d'indexation GDK ou RDK, en ajoutant éventuellement un identifiant de sous-système dans le cas où plusieurs instances de dispositif génériques GD correspondent à une seule instance de modèle de dispositif de bas-niveau.

Selon un mode de mise en œuvre, les instances de modèle de dispositif générique GD sont seulement partiellement mémorisées de façon persistante. Ainsi, seules les identifiants GDURL de dispositif et les classes ou types GDT sont persistées. Les attributs GA et les variables d'états GS sont recalculés à partir des données des instances de modèles de bas-niveau comme cela sera décrit ultérieurement.

Les pilotes de protocoles PD identifiés sur la figure 3 vont être à présents décrits. Les pilotes de protocole mettent en œuvre la logique centrale de la couche d'abstraction, à savoir les règles de conversion diverses entre les deux modèles génériques et de bas niveau. Il peut exister un pilote de protocole PD par type de protocole supporté, même si différents pilotes peuvent partager des fonctionnalités communes, en capitalisant sur les implémentations existantes.

Chaque pilote de protocole PD peut réaliser un ensemble d'opérations de conversions. Afin de réaliser les différentes conversions mentionnées ci-dessous, un pilote de protocole peut être associé à une base de donnée de règles de conversion RDB comprenant les différents types de règles de conversion mentionnées ci-dessous, à savoir: des règles de conversion de modèles MCR; des règles de conversion d'état SCR ; des règles de conversion de commande CCR. Bien entendu, ces différents types de règles peuvent être stockées également de façon séparées. Par ailleurs, par base de données, on entend ici un mode de stockage approprié pour un ensemble de règles, qui peuvent être mémorisées dans une liste, un arbre ou des tables ou tout autre structure de données appropriée. Il est à noter que les règles de conversions MCR, SCR, CCR sont stockées ou enregistrées de façon indépendante des instances, mais seulement en fonction des types de modèles de dispositif. Ces dispositions permettent de limiter le volume d'informations relatives aux conversions qui ne sont pas dupliquées pour chaque instance de modèle.

En particulier, un pilote de protocole PD peut réaliser une conversion de modèle CvM, c'est à dire la détermination ou la sélection d'une classe ou type de dispositif générique GDT, ou d'une liste de classes ou types GDT, à partir d'une instance de modèle de dispositif de bas niveau RD donnée, sur la base d'au moins une règle de conversion de modèle MCR. Si l'instance de modèle de dispositif de bas niveau RD nécessite d'être représentée par plusieurs instances de modèles de dispositifs génériques GD, le pilote retournera une liste de tels sous-systèmes en tant que conversion de modèle CvM. En particulier, la sélection d'une classe générique de dispositif peut utiliser le type d'une instance de modèle dispositif de bas niveau RDT mais pourrait également utiliser d'autres attributs dans le processus de sélection. Ceci est utile par exemple pour les dispositifs modulaires pour lesquels une fonction optionnelle peut être présente ou non. Par exemple : la présence optionnelle d'un capteur additionnel pour un système de chauffage.

Selon un mode de réalisation, le pilote de protocole PD peut réaliser la détermination du type ou classe de modèle de dispositif générique GDT en consultant une table MTbl de sa base de données RDB. A titre d'exemple, la table MTbl peut comprendre des colonnes comprenant les données suivantes :
- un type de dispositif de bas-niveau RDT
- au moins un type ou classe de dispositif générique correspondant GDT.

Deux exemples de sélection de type GDT sont décrits ci-dessous.

### Exemple 1 :

Nous supposons que l'instance de dispositif de bas-niveau RD découverte ou configurée est définie de la façon décrite dans le tableau ci-dessous.

| RDPT | RDT | RA | RDID |
|---|---|---|---|
| IO | 0x0100202 | - | 120403 |

Cette ligne correspond à un dispositif identifié par son adresse radio IO 120403 sur un réseau local IO géré par une unité centrale de commande définie par identifiant UID non représenté, le type de protocole local utilisé étant IO homecontrol, le type de modèle de dispositif de bas niveau étant 0x0100202, ce qui correspond selon une implémentation à un volet roulant avec gestion de basse vitesse du fabricant SOMFY.

Ces données sont communiquées comme entrée au pilote de protocole PD correspondant au protocole IO. Le pilote de protocole réalise la détermination du type ou classe de modèle de dispositif générique GDT en consultant la table MTbl de sa base de données RDB. La sélection permet d'identifier un exemple de ligne de table MTbl reproduite ci-dessous.

| RDT | GDT |
|---|---|
| 0x0100202 | RollerShutterWithLowSpeedSupport |

Ainsi, le type de dispositif générique identifié est « volet roulant avec gestion de basse vitesse » / (RollerShutterWithLowSpeedSupport). Dans cet exemple, le type de dispositif de bas-niveau RDT est associé à un seul type de dispositif générique qui correspond à la conversion de modèle CvM. Il n'y a pas de sous-système.

### Exemple 2 :

Nous supposons que l'instance de dispositif de bas-niveau RD découverte ou configurée est définie de la façon décrite dans le tableau ci-dessous.

| RDPT | RDT | RA | RDID |
|---|---|---|---|
| MODBUS | 0x00101 | 'sensorAvailable'=true | 4 |

Cette ligne correspond à un dispositif identifié par son adresse bus MODBUS 4 sur le réseau local MODBUS, le type de protocole local utilisé étant MODBUS, le type de modèle de dispositif de bas niveau étant 0x00101, ce qui correspond selon une implémentation à un système de chauffage avec un capteur de température extérieure optionnel.

Ces données sont communiquées comme entrée au pilote de protocole PD correspondant au protocole MODBUS. Le pilote de protocole réalise la détermination du type ou classe de modèle de dispositif générique GDT en consultant la table MTbl de sa base de données RDB. La sélection permet d'identifier un exemple de ligne de table MTbl reproduite ci-dessous.

| RDT | GDT |
|---|---|
| 0x00101 | HeatingSystemController OutsideAirTemperatureSensor (only if attribute 'sensorAvailable'=true) |

Ainsi, les types de dispositif génériques GDT identifiés sont :
- « Contrôleur de système de chauffage » / (HeatingSystemController) ; et
- « Capteur de température extérieure » / (OutsideAirTemperatureSensor).

Dans cet exemple, le type de dispositif de bas-niveau RDT est associé à deux types de dispositif génériques qui correspondent à la conversion de modèle CvM. Ainsi, l'instance de dispositif de modèle de bas-niveau RD sera associée à deux instances de modèle de dispositif générique GD qui forment deux sous-systèmes, à savoir un contrôleur principal et un capteur. Dans cet exemple le capteur est optionnel mais est présent sur le dispositif particulier considéré. Si le capteur n'était pas présent, par exemple parce qu'il n'avait pas été installé, le pilote de protocole n'aurait retourné qu'un seul type correspondant donc à un seul sous-système, à savoir le contrôleur principal.

Un pilote de protocole PD peut par ailleurs procéder à la détermination d'une ou plusieurs variables d'états de bas-niveau RS correspondant à une variable d'état générique GS, Un pilote de protocole peut également fournir une règle permettant de déterminer les valeurs GSV des variables d'état génériques GS d'un type de modèle de dispositif générique GDT à partir des valeurs RSV de variables d'état de bas niveau RS correspondant à un identifiant RSID donné. En particulier, cette règle de conversion SCR peut être définie comme une expression ou un fragment de code d'un langage de programmation interprétable s'appliquant à une valeur d'une variable identifiée par un identifiant RSID. Alternativement, cette règle peut être définie comme un fragment de code précompilé pour une machine virtuelle, ou encore un fragment de code binaire, compilé pour le processeur destiné à exécuter ce code (librairie).

Selon un mode de réalisation, le pilote de protocole PD peut réaliser la détermination d'une règle de conversion d'état SCR d'une variable d'état de bas niveau RS en une ou plusieurs variables d'états génériques GS en consultant une table STbl de sa base de données RDB. A titre d'exemple, la table STbl peut comprendre des colonnes comprenant les données suivantes :
- un identifiant ou un nom de variable d'état générique GSID ;
- un type de dispositif générique GDT ;
- un identifiant ou un nom de variable de bas niveau RSID ;
- une règle de conversion d'état SCR entre la valeur d'une variable d'état de bas-niveau RSV et une valeur d'une variable d'état générique GSV.

Deux exemples de conversion de variable d'état sont décrits ci-dessous.

### Exemple 1 :

Nous supposons qu'une expression conditionnelle générique GCE définie par un utilisateur porte sur une variable d'état générique GS identifiée par son identifiant GSID d'une instance de modèle de dispositif générique identifié par son identifiant GDURL définie de la façon décrite dans le tableau ci-dessous.

| GDURL | GDT | GSID |
|---|---|---|
| modbus://1234-5678-0000/1234 | HeatingSystem | RegulationModeState |

Cette variable d'état générique GS est donc une variable du type « RegulationModeState » correspondant au mode de régulation d'une instance de modèle de dispositif générique « HeatingSystem » d'un dispositif de type système de chauffage.

Il peut être déduit de l'identifiant GDURL, ou en interrogeant la base IDB pour identifier l'instance de modèle de dispositif de bas-niveau correspondante, que le protocole de communication utilisé par le dispositif D correspondant est le protocole MODBUS.

Le pilote de protocole PD du protocole MODBUS peut sur cette base sélectionner une règle de conversion d'état SCR ou expression de conversion en utilisant le nom ou identifiant de la variable d'état de bas niveau RSID.

La sélection permet d'identifier un exemple de ligne de table STbl reproduite ci-dessous.

| GSID | GDT | RSID | SCR |
|---|---|---|---|
| RegulationModeState | HeatingSystem | 0x0C213 | if (v == 123) then return 'auto' else return 'manual' end; |

Ainsi, la règle de conversion d'état pour la variable d'état générique identifiée est un fragment de code du type « *if (v == 123) then return 'auto' else return 'manual' end »,* ce fragment s'appliquant à une valeur de variable d'état (représenté ici par la lettre v) de bas niveau identifiée par son RSID « 0x0C213 » .

### Exemple 2 :

Nous supposons qu'une expression conditionnelle générique GCE définie par un utilisateur porte sur une variable d'état générique GS identifiée par son identifiant GSID d'une instance de modèle de dispositif générique identifié par son identifiant GDURL définie de la façon décrite dans le tableau ci-dessous.

| GDURL | GDT | GSID |
|---|---|---|
| io://1234-5678-0000 /101 | TemperatureSensor | TemperatureState |

Cette variable d'état générique GS est donc une variable du type « TemperatureState » correspondant à la température mesurée d'une instance de modèle de dispositif générique « TemperatureSensor » d'un dispositif de type capteur de température.

Il peut être déduit de l'identifiant GDURL, ou en interrogeant la base IDB pour identifier l'instance de modèle de dispositif de bas-niveau correspondante, que le protocole de communication utilisé par le dispositif D correspondant est le protocole IO.

Le pilote de protocole PD du protocole IO peut sur cette base sélectionner une règle de conversion d'état SCR ou fonction de conversion en utilisant le nom ou identifiant de la variable d'état de bas niveau RSID.

La sélection permet d'identifier un exemple de ligne de table STbl reproduite ci-dessous.

| GSID | GDT | RSID | SCR |
|---|---|---|---|
| TemperatureState | TemperatureSensor | 0x14 | return v/51200; |

Ainsi, la règle de conversion d'état pour la variable d'état de haut niveau identifiée est un fragment de code ou expression du type « v/51200 », ce fragment s'appliquant à une valeur de variable d'état (représenté ici par la lettre v) de bas niveau identifiée par son RSID « 0x14 ».

Un pilote de protocole peut en outre déterminer une conversion d'une commande générique GC associée à une instance de modèle de dispositif générique GD en une ou plusieurs commandes de bas-niveau RC spécifiques du protocole à exécuter sur le dispositif réel D, sur la base d'au moins une règle de conversion de commande CCR. Par exemple, la commande décrite ci-dessus setClosure(p%) peut avoir différentes traductions en fonction du protocole du dispositif de bas niveau RD et de son type RDT, et parfois de la configuration particulière de ce dispositif. Cette conversion est implémentée dans le pilote de protocole correspondant au protocole de communication local utilisé par le dispositif domotique. En particulier, cette règle de conversion CCR peut être définie comme une expression ou un fragment de code d'un langage interprétable, associée à un type de dispositif de bas-niveau RDT.

Ainsi, pour convertir une commande générique GC en une commande de bas-niveau RC ou une combinaison de commandes de bas niveau RC, il convient de procéder à :
- une reconnaissance de l'instance de modèle de dispositif de bas-niveau cible RD, par l'intermédiaire de l'identifiant d'instance de modèle de dispositif générique fournie GDURL; puis
- une détermination de la conversion à réaliser sur la base du type de dispositif de bas niveau correspondant à l'instance sélectionnée RD en utilisant une règle de conversion de commande CCR ou fonction de conversion.

Dans la plupart des cas, le pilote de protocole utilise seulement le type de dispositif de bas-niveau RDT, mais dans certains cas complexes, la valeur de certains attributs peut être nécessaire pour déterminer complètement la commande de bas niveau à générer. Dans de tels cas, le pilote de protocole peut accéder aux attributs requis en utilisant l'identifiant d'unité centrale de commande UID et l'identifiant de l'instance de dispositif de bas-niveau RDID.

La commande générique GC peut présenter des paramètres, auquel cas ceux-ci seront transmis à règle de conversion CCR. La règle de conversion CCR peut également utiliser des informations contextuelles comme l'utilisation attendue de la commande ou le niveau de priorité de la commande.

Selon un mode de réalisation, le pilote de protocole PD peut réaliser la détermination d'une conversion d'une commande générique GC en une ou plusieurs commandes de bas-niveau RC en consultant une table CTbl de sa base de données RDB. A titre d'exemple, la table CTbl peut comprendre des colonnes comprenant les données suivantes :
- un type de dispositif de bas-niveau RDT;
- un nom ou identifiant de commande générique GCID;
- une règle de conversion de commande CCR ou fonction de conversion.

Deux exemples de conversion de commande générique GC sont décrits ci-dessous.

### Exemple 1 :

Nous supposons que la commande générique GC considérée est définie de la façon décrite dans le tableau ci-dessous.

| GDURL | GC |
|---|---|
| io://1234-5678-0000/120403 | setClosure(p) |

Cette commande correspond à un ordre à un volet roulant communiquant en IO avec une adresse radio 120403 dans le réseau local géré par l'unité centrale de commande ayant l'identifiant 1234-5678-0000, de se fermer à p%, p désignant un paramètre représentatif du pourcentage de fermeture.

Il convient dans un premier temps de déterminer l'instance de modèle de dispositif générique, en utilisant l'adresse comprise dans le GDURL, et ensuite, sur la base des enregistrements qui associent les instances génériques GD et les instances de bas-niveau RD correspondantes, déterminer l'instance de bas niveau correspondante et son type. Nous supposerons que le type de dispositif de bas-niveau RDT est 0x0100202, ce qui correspond à un volet roulant avec gestion de basse vitesse du fabricant SOMFY.

Le pilote de protocole peut ensuite sur cette base procéder à la conversion, en sélectionnant une règle de conversion de commande CCR ou fonction de conversion en utilisant le type de dispositif de bas-niveau RDT et le nom ou identifiant de la commande générique GCID.

La sélection permet d'identifier un exemple de ligne de table CTbl reproduite ci-dessous.

| | | |
|---|---|---|
| RDT | GCID | CCR |
| 0x0100202 | setClosure (p) | return createActivateFunc(p*51200) |

La règle de conversion de commande CCR correspond donc à l'expression ou fragment de code *« createActivateFunc(p*51200)* » qui correspond à une commande de bas-niveau RC de type 'Activate Func', spécifique du protocole IO avec un paramètre principal mis à l'échelle à partir du paramètre générique p. Ici, la fonction « createActivateFunc()» retourne des données binaires destinées à être utilisée par une unité centrale de commande U pour former le corps (payload) d'une trame radio IO.

### Exemple 2 :

Nous supposons que la commande générique GC considérée est définie de la façon décrite dans le tableau ci-dessous.

| GDURL | GC |
|---|---|
| modbus://1234-5678-0000/4 | setTargetTemperature(p) |

Cette commande correspond à un ordre à un système de chauffage communiquant en MODBUS avec une adresse bus 4 dans le réseau local géré par l'unité centrale de commande 1234-5678-0000 de régler son thermostat sur une température de consigne de p°C.

Il convient dans un premier temps de déterminer l'instance de modèle de dispositif de bas niveau correspondante et son type, en utilisant l'adresse comprise dans le GDURL, et ensuite, sur la base des enregistrements qui associent les instances génériques GD et les instances de bas-niveau RD correspondantes, de déterminer l'instance de bas niveau correspondante et son type. Nous supposerons que le type de dispositif de bas-niveau RDT est 0x00101, ce qui correspond selon une implémentation à un système de chauffage avec un capteur de température extérieure optionnel.

Le pilote de protocole modbus peut ensuite sur cette base déterminer la conversion, en sélectionnant une règle de conversion de commande CCR ou fonction de conversion en utilisant le type de dispositif de bas-niveau RDT et le nom ou identifiant de la commande générique GCID.

La sélection permet d'identifier un exemple de ligne de table CTbl reproduite ci-dessous.

| RDT | GCID | CCR |
|---|---|---|
| 0x00101 | setTargetTemperature (with one parameter p) | return { createConfigurationModeCommand(), createSetTargetTemperatureCommand(p) } |

La règle de conversion de commande CCR correspond à deux commandes de bas-niveau RC : la première commande met le dispositif en mode configuration et la seconde commande définit la température cible en utilisant la valeur du paramètre générique p. Ici, les fonctions « createConfigurationModeCommand() » et « createSetTargetTemperatureCommand() » retournent des données binaires spécifiques au protocole MODBUS destinées à être transmise sur le bus du dispositif par une unité centrale de commande U pour changer la configuration du système de chauffage.

La description des règles de conversion d'état SCR, et/ou des règles de conversion de commande SCC comme des expressions ou un fragments de code d'un langage interprétable permet notamment de combiner différentes expressions pour obtenir des expressions plus complexes ou de réaliser les calculs. Il peut être souhaitable selon les modes d'implémentation d'interpréter ces expressions sur une unité centrale de commande distantes U pour l'exécution de modules de codes conditionnels interprétables MCC comme sera décrit ultérieurement. Dans ce cas, un langage de programmation interprétable par les unités centrales de commande distantes doit être utilisé. Un module logiciel « interpréteur » IM est utilisé dans ce cas. De plus, afin de capitaliser sur cette implémentation, il est souhaitable de sélectionner un langage qui peut être interprété également du côté serveur. En particulier, un langage de programmation interprétable supportant les fermetures anonymes peut être choisi afin de permettre une agrégation aisée des expressions A titre d'exemple, il est possible d'utiliser le langage Lua1 qui est adapté à une exécution sur un matériel embarqué. Une implémentation modifiée de LuaJ2 peut être par exemple utilisée du côté serveur pour fournir la capacité de montée en charge désirée.

En variante, les règles de conversion d'état SCR et/ou les règles de conversion de commande SCC peuvent être présentées :
- sous forme de code source d'un langage de programmation compilable ; une étape supplémentaire de compilation pour le processeur cible est nécessaire dans ce cas.
- sous forme précompilé pour une machine virtuelle ; la machine virtuelle doit être implémentée sur l'entité Sv, U destinée à exécuter le code logiciel conditionnel et un chargement du module de code logiciel conditionnel CCM sur la machine virtuelle doit être effectué préalablement à l'exécution.
- Sous forme binaire ou exécutable, comme une suite d'instructions en langage machine du processeur cible; dans ce cas, les tables de conversion peuvent contenir le code source qui est compilé par l'unité de gestion Sv, pour un processeur destiné à exécuter le code ; les caractéristiques du processeur doivent être connues à l'avance ; pour pouvoir exécuter ce fragment de code logiciel, l'entité qui exécute le code, par exemple l'unité de commande U ou l'unité de gestion Sv doivent disposer préalablement de l'interface de programmation permettant l'appel du fragment de code généré. Le code binaire/exécutable généré peut être intégré sous forme de librairie(s), dans le logiciel exécutable par l'unité de commande U.

Les figures 6 à 11 représentent des modes de mise en œuvre de procédés de configuration, de génération de code, de mise à jour, de commande et de contrôle sur la base du système décrit ci-dessus.

Un procédé de configuration d'une d'au moins une installation domotique 17 d'un bâtiment 1 exécuté par un serveur Sv connecté à l'au moins une installation domotique 17 va être à présent décrit en référence à la figure 6.

Dans un premier temps, le procédé comprend une étape de réception ECfES1 d'un message de configuration MCf émis à partir d'une unité centrale de commande U d'une installation domotique 17, dans une étape ECfU1. Le message de configuration MCf contient une indication d'une mise en service d'un nouveau dispositif domotique D ou d'une mise à jour/reconfiguration d'un dispositif préalablement installé.

Selon une alternative, il est possible que le message MCf soit émis par un terminal T d'un utilisateur dans une étape ECfTl. A titre d'exemple, dans le cas de protocoles monodirectionnels, l'utilisateur peut effectuer la mise en service, la configuration ou la reconfiguration/mise à jour du dispositif D sur le lieu de l'installation domotique et envoyer ensuite les informations avec son terminal T pour initier le procédé de configuration. Le procédé comprend ensuite une étape de création ECfES2 de l'au moins une instance de modèle de dispositif de bas-niveau RD représentant le dispositif domotique D. L'instance de modèle de dispositif de bas-niveau RD est stockée dans la base de données IDB accessible au service d'exécution ES. En particulier une ligne de la table RDTbl peut être créée comme cela a été décrit précédemment sur la base des informations contenues ou déduites de la réception du message MCf. En effet, le contenu du message MCf ou les informations sur son émetteur permettent de déterminer des informations sur :
- l'identifiant de l'unité centrale de commande U à laquelle un dispositif domotique est rattaché UID;
- l'adresse du dispositif domotique dans le réseau local géré par l'unité centrale de commande RDID;
- le type de protocole local utilisé RDPT;
- type de modèle de dispositif bas niveau RDT, correspondant par exemple à une désignation de volet roulant ou encore d'éclairage.

Une étape de détermination ECfS3 d'une classe ou type de dispositif générique GDT, ou d'une liste de classes ou types GDT, à partir d'une instance de modèle de dispositif de bas niveau RD donnée est ensuite réalisée, ce qui correspond à la détermination d'une conversion de modèle CvM. Cette étape est réalisée par le biais d'un appel de fonction du pilote de protocole PD qui reçoit cet appel dans une étape ECfPD3 et qui dispose de la base de données de règles de conversion RDB comprenant des règles de conversion de modèle MCR. Si l'instance de modèle de dispositif de bas niveau RD nécessite d'être représentée par plusieurs instances de modèles de dispositifs génériques GD, le pilote retournera une liste de telles classes ou types de sous-systèmes GDT1, GDT2, comme cela a également été décrit précédemment.

Une étape de création ECfES4 de l'au moins une instance de modèle de dispositif générique GD1, GD2 pour l'au moins une instance de modèle de dispositif de bas-niveau RD est ensuite réalisée sur la base des types ou classes GDT1, GDT2 déterminés à l'étape ECfES3. Les instances de modèles de dispositifs génériques GD1, GD2 sont stockées dans la base IDB, par exemple dans une table GDTbl comme cela a été décrit précédemment. Le lien entre une instance de modèle de dispositif de bas-niveau RD et une ou plusieurs instances de modèles génériques GD1, GD2 peut notamment être réalisé par les identifiants GDURL ou les clés d'indexation GDK et RDK comme cela a été décrit précédemment.

Le procédé peut comprendre une étape ultérieure ECfES5 de notification de l'utilisateur sur la configuration d'un nouveau dispositif D, de façon sollicitée ou non par l'utilisateur, qui reçoit cette notification dans une étape ECfUsr5. Il est également possible de procéder à la notification d'une autre application A exécutée sur le serveur Sv qui reçoit cette notification dans une étape ECfA5.

Le procédé de configuration est réalisé lors de la mise en service, de la configuration ou de la reconfiguration d'un équipement domotique D.

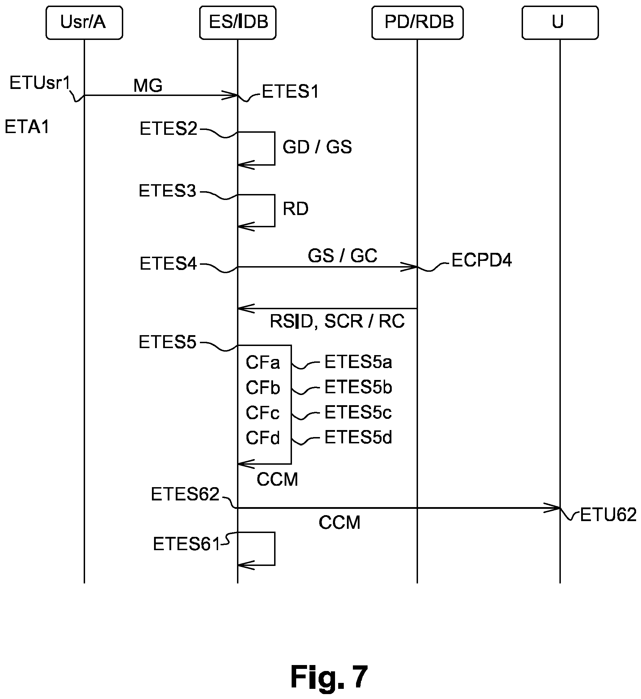

Un procédé de génération d'un module de code logiciel conditionnel CCM destiné au contrôle d'au moins une installation domotique 17 d'un bâtiment 1 exécuté par un serveur Sv connecté à l'au moins une installation domotique 17 va être à présent décrit en référence à la figure 7. Nous supposerons que le procédé de génération d'un module de code logiciel conditionnel est réalisé postérieurement au procédé de configuration précédemment décrit. Ainsi, les instances de modèles de dispositif de bas-niveau RD, et les instances de modèles de dispositif génériques GD correspondantes sont stockées de façon associée dans une base de données d'instances IDB accessible au service d'exécution ES, comme nous l'avons précédemment décrit.

Un module de code logiciel conditionnel CCM associe au moins une action, comme par exemple une commande à effectuer ou l'envoi d'une notification, à la réalisation d'une condition sur une ou plusieurs variables états. Une programmation des conditions et des actions associées pour les modèles génériques permet de réaliser cette programmation de manière uniforme pour toutes les installations, quel que soit le ou les protocoles locaux mis en œuvre dans chaque installation. En utilisant les règles de conversion d'état SCR et de commande CCR, il est possible d'évaluer une expression conditionnelle générique GCE sur une ou plusieurs variables d'état génériques GS en fonction des valeurs RSV des variables d'état de bas-niveau RS.

Dans un premier mode de réalisation, l'évaluation de la valeur d'une variable d'état générique GSV peut être obtenue par l'agrégation de deux fragments de code logiciel sélectionnés dans les tables de conversions décrites précédemment :
- le premier fragment de code, « fetch RawValue », permet de déterminer la valeur RSV d'une variable d'état de bas niveau RS nécessaire à l'évaluation de la condition ;
- et le deuxième fragment de code permet la transformation de la valeur de variable de bas niveau RSV en valeur de variable d'état générique GSV.
Chaque fragment de code est réalisé par une expression de langage interprétable comprenant au moins une règle de conversion d'état SCR. Il est ensuite possible de procéder à l'évaluation de l'expression conditionnelle générique GCE elle-même en fonction des valeurs GSV des variables d'état génériques GS.

L'évaluation de cette condition dans le langage commun peut être réalisée sur une unité centrale U d'une installation domotique après téléchargement sur cette unité. En effet, les unités centrales de commande U distantes voient seulement des expressions associées à des étapes de collecte et de conversion utilisant en entrée des valeurs de variables de bas-niveau et n'ont pas besoin d'éléments du modèle de référence ou de l'implémentation de la couche d'abstraction pour fonctionner.

Ainsi, des modules de code conditionnel interprétable CCM peuvent être exécutés de façon locale sur les unités centrales de commande U.

Le procédé sera décrit ci-dessous et illustré sur la base d'un exemple.

Dans un premier temps, le procédé comprend une étape de réception ETES1 d'un message MG ou d'une instruction de génération d'un module de code logiciel conditionnel CCM en provenance d'un utilisateur Usr ou d'une application A sur l'unité de gestion Sv ou sur une autre unité de gestion connectée, le message de commande comprenant une expression conditionnelle générique GCE portant sur au moins une variable d'état générique GS d'au moins un dispositif domotique D et définissant au moins une évaluation de condition et/ou au moins un déclenchement conditionnel d'au moins une commande générique GC relative à un moins un dispositif domotique D.

Un exemple d'expression conditionnelle générique GCE est détaillé ci-dessous.

### Exemple :

- l'utilisateur définit une expression conditionnelle générique GCE:
   (v1 == 'auto' and v2>v3)

Avec les variables d'état génériques GS suivantes :

| Variable | GDURL | GSID |
|---|---|---|
| v1 | modbus://XXXX/1234 (Système de chauffage) | RegulationModeState |
| v2 | io://XXXX/101 (Capteur de Température) | TemperatureState |
| v3 | enocean://XXXX/28 (Capteur de Température) | TemperatureState |

Pour interpréter cette expression et générer le module de code logiciel conditionnel CCM correspondant, il convient de procéder dans un premier temps à une étape de détermination ETES2 de l'au moins une instance de modèle de dispositif générique GD représentant le dispositif domotique D et de l'au moins une variable GS concernée.

Dans l'exemple considéré, il apparaît que trois instances de modèles de dispositif générique GD sont concernées par l'expression conditionnelle générique GCE, et trois variables d'état génériques GS (une par instance).

Une fois l'étape ETES2 réalisée, le procédé comprend une étape de détermination ETES3 de l'au moins une instance de modèle de dispositif de bas-niveau RD correspondant à l'au moins une instance de modèle de dispositif générique GD. Les instances de modèles de dispositif de bas-niveau RD, et les instances de modèles de dispositif génériques GD sont stockées de façon associée dans la base de données d'instances IDB accessible au service d'exécution ES.

Il est ainsi possible d'utiliser les informations contenues dans l'identifiant GDURL pour retrouver les instances de modèles de dispositif de bas-niveau concernées. D'autre mécanismes utilisant les clés d'indexation telles que décrites précédemment peuvent être utilisés.

Une étape de détermination d'une conversion ETES4 des variables génériques GS et des commandes génériques éventuelles GC de l'expression conditionnelle générique GCE est ensuite réalisée. Cette étape est effectuée en particulier par un appel au pilote de protocole PD qui possède une base de règles de conversion d'état SCR et de règles de conversion de commande CCR en fonction des types de modèles de dispositif génériques GD et de modèles de dispositif de bas-niveau RD utilisés.

Nous avons précédemment décrit la façon dont un pilote de protocole procède à la conversion des variables d'état génériques GS sur la base de règles de conversion SCR sous forme d'expression ou de fragment de code interprétable.

Ainsi, les pilotes de protocole fournissent des fragments de code correspondant à des règles de conversion d'état SCR pour déterminer les valeurs des variables d'état génériques GS d'un type de modèle de dispositif générique GDT à partir des valeurs de variables d'état de bas niveau RS correspondant à un identifiant RSID donné:
Le pilote de protocole effectue à cet effet une étape de sélection de règles de conversion dans la base de règles de conversion RDB dans une étape ETPD4, puis retourne les règles de conversion SCR à appliquer ou directement une expression.

En particulier, chaque pilote de protocole peut utiliser la table STbl décrite précédemment, correspondant au protocole concerné. En utilisant cette table, il est possible d'obtenir à la fois l'identifiant RSID de la variable d'état de bas-niveau RS, ou éventuellement des variables d'état de bas-niveau RS correspondant à chaque variable d'état générique GS concernée par l'expression conditionnelle générique, mais également la règle de conversion SCR correspondant, sous la forme d'un fragment de code interprétable.

Ainsi, en interrogeant les trois pilotes de protocole IO homecontrol, MODBUS et EnOcean, les données suivantes sont obtenues pour les trois variables de l'exemple :

| GS | GDT | Protocole | RSID | SCR |
|---|---|---|---|---|
| RegulationModeState | HeatingSystem | MODBUS | 0x0C213 | if (v == 123) then return 'auto' else return 'manual' end; |
| TemperatureState | TemperatureSensor | IO Homecontrol | 0x14 | return v/51200; |
| TemperatureState | TemperatureSensor | EnOcean | 0x08 | return bit.lshift(v,2)/0.1; |

Grâce à ces éléments, il est possible de déterminer les variables d'état de bas-niveau RS dont les valeurs doivent être connues pour évaluer l'expression conditionnelle générique GCE. Il est ainsi possible de déterminer l' identifiant RSID desdites variables, mais également les règles de conversion SCR à appliquer aux valeurs RSV de ces variables d'état RS pour obtenir des valeurs GSV de variables génériques GS auxquelles s'applique l'expression conditionnelle générique GCE.

Sur cette base, dans une cinquième étape ETES5, une étape de génération du module de code logiciel conditionnel est réalisée sur la base des informations collectées dans les étapes précédentes.

Cette cinquième étape peut comprendre les quatre sous-étapes suivantes :
a. génération ETES5a de fragments de codes pour la collecte des valeurs RSV de variables d'état de bas niveau RS nécessaire à l'évaluation de l'expression conditionnelle générique GCE ;
b. génération ETES5b de fragments de codes pour la conversion des valeurs RSV de variables d'état de bas niveau RS nécessaire à l'évaluation de l'expression conditionnelle générique GCE en valeur GSV de variables d'états génériques ;
c. définition de fragments de code ETES5c pour l'évaluation de l'expression conditionnelle générique GCE ;
d. génération ETES5d optionnelle de fragments de code pour la définition de commandes de bas-niveau RC correspondant à des commandes génériques GC définies dans l'expression conditionnelle générique, ou à l'envoi d'une notification, ou au renvoi d'un résultat.

Ces différentes sous-étapes sont décrites ci-dessous.

Dans une première sous-étape ETES5a, une génération ETES5a de fragments de codes pour la collecte des valeurs RSV de variables d'état de bas niveau RS nécessaire à l'évaluation de l'expression conditionnelle générique GCE est réalisée. Pour collecter les valeurs RSV correspondant aux variables de bas niveau, une fonction est définie, dénommée dans l'exemple « fetchRawValue » qui peut retourner la valeur RSV souhaitée, à partir de paramètre d'appel correspondant à l'identifiant de la variable de bas niveau RSID et à l'identifiant de l'instance de modèle de dispositif de bas-niveau RD.

En particulier, le prototype de cette fonction peut être du type :
*RSV fetchRawValue( RDPT, RDID, RSID)*

Ainsi, cette fonction prend comme paramètres:
- Le type de protocole local utilisé RDPT ;
- L'identifiant d'un dispositif de bas-niveau RDID ;
- L'identifiant d'une variable d'état de bas-niveau RSID.

Cette fonction retourne une valeur de variable de bas niveau correspondante.

Il est à noter que dans l'implémentation décrite, l'identifiant de l'unité électronique de commande UID n'est pas spécifié dans le prototype de la fonction, car il s'agit d'une donnée pouvant être accessible par une variable globale. Cette donnée pourrait toutefois également faire partie des paramètres d'appel.

Ainsi, dans l'exemple présenté ci-dessus, il est possible pour le service d'exécution, en fonction de collecter les valeurs RSV des variables d'état de bas-niveau RS correspondant aux trois variables d'état génériques GS par trois appels à la fonction « fetchRawValue » correspondant à trois premiers fragments de code CFa :
*local rawValue1 =fetchRawValue('modbus',**1234,0x0C213**),*
*local rawValue2 =fetchRawValue('io',**101,0x14**);*
*local rawValue3 = fetchRawValue('enocean', **28,0x08**);*

Les trois variables locales *rawValue1, rawValue2* et *rawValue3* contiennent ainsi les valeurs des variables d'état de bas-niveau nécessaires à l'évaluation de l'expression conditionnelle générique GCE.

Par la suite, dans la seconde sous-étape ETES5b, il est possible de définir la conversion des valeurs de variables d'état de bas-niveau RSV en valeurs de variables d'état génériques GSV sur la base des règles de conversion SCR identifiées précédemment.

Ainsi, dans l'exemple présenté, le service d'exécution peut agréger les deuxièmes fragments de codes CFb correspondant aux règles de conversion pour réaliser les conversions suivantes :
*local v1 = (function(v) **if (v == 123) then return 'auto' else return 'manual' end;** end)(rawValue1);*
*local v2 = (function(v)* ***return v*/*****51200;** end)(rawValue2);*
*local v3 = (function(v)* ***return bit.lshift(v,2)*/*****0.1;** end)(rawValue3);*

Les trois variables locales v1, v2 et v3 contiennent ainsi les valeurs GSV des variables d'état génériques nécessaires à l'évaluation de l'expression conditionnelle générique GCE.

Dans une troisième sous-étape ETES5c, un troisième fragment de code Cfc peut ensuite être ajouté correspondant à l'évaluation de l'expression conditionnelle générique GCE. Il est à noter que ce fragment de code correspond à l'expression conditionnelle générique GCE elle-même, qui ne nécessite pas de traduction étant donné que la conversion préalable retourne des valeurs GSV qui sont des valeurs des variables d'état génériques.

Ainsi, dans l'exemple présenté, ce troisième fragment de code CFc peut prendre la forme simple suivante :
*return **(v1** == **'auto' and v2>v3);***

Selon un mode de réalisation, l'expression peut retourner une valeur booléenne (vrai/faux).

Dans le cadre de la simple évaluation d'une expression, le code interprétable est alors défini.

Dans une quatrième sous-étape optionnelle ETES5d, la définition de commandes de bas-niveau RC correspondant à des commandes génériques GC définies dans l'expression conditionnelle générique peut être réalisée, ou encore l'envoi d'une notification, ou encore l'envoi d'un résultat. Ici, la quatrième étape correspond simplement au renvoi d'une valeur booléenne et est confondue avec la définition du fragment de code de la troisième étape.

Le code ainsi généré dans les quatre sous-étapes peut être regroupé dans une fonction, par exemple dénommée « IsConditionVerified ».

Ainsi, dans l'exemple présenté, ladite fonction est définie de la façon suivante
*function is ConditionVerified()*
- - *Step 1: fetch raw state values*
*local rawValue1 = fetchRawValue('modbus',**1234,0x0C213**);*
*local rawValue2 = fetchRawValue('io',**101,0x14**);*
*local rawValue3 = fetchRawValue('enocean', **28,0x08**);*
- - *Step 2 : convert to high-level value*
*local v1 = (function(v) **if (v** == **123) the return 'auto' else return 'manual' end;** end)(rawValue1);*
*local v2 = (function(v)* ***return v*/*****51200;** end)(rawValue2);*
*local v3 = (function(v)* ***return bit.lshift(v,2)*/*****0.1;** end)(rawValue3);*
- - *Step 3 : evaluate condition*
*return **(v1** == **'auto' and v2>v3);***
   *end*

Selon une variante, il est possible de procéder à une génération du code logiciel de la fonction regroupant les quatre sous-étapes, toujours en partant des mêmes fragments de code sélectionnés dans les tables de conversion, afin par exemple de rendre le code plus lisible ou de l'optimiser
*function convert1(v) if (v == 123) the return 'auto' else return 'manual' end; end*
*function convert2(v) return v*/*51200; end*
*function convert3(v) return bit.lshift(v,2)*/*0.1; end*
*function isConditionVerified()*
- - *Step 1 :fetch raw state values*
*local rawValue1 = fetchRawValue('modbus',1234,0x0C213);*
*local rawValue2 = fetchRawValue('io',101,0x14),*
*local rawValue3 = fetchRawValue('enocean', 28,0x08);*
- - *Step 2 : convert to high-level value*
*local v1 = convertl(rawValue1);*
*local v2 = convert2(rawValue2);*
*local v3 = convert3(rawValue3);*
- - *Step 3 : evaluate condition*
*return (v1 == 'auto' and v2>v3);*
   *end*

Les fonctions « isConditionVerified » , respectivement «fetchRawValue », ont le même prototype qu'elles soient exécutées par le Serveur ou par l'Unité centrale de commande U. Le procédé de génération de code est donc le même dans les deux cas, ce qui aboutit à générer un fragment de code interprétable correspondant à un ou plusieurs appel(s) de la fonction « fetchRawvalue », en lui passant des paramètres effectifs déduits à partir des variables d'états générique GS et de l'instance de modèle générique GD concernés par l'expression conditionnelle générique GCE.

Deux exemples sont détaillés ci-dessous dans lesquels un effet est défini comme l'exécution d'une commande lors de la quatrième étape.

Selon un premier exemple, une commande définie de façon statique peut être réalisée. Cette commande générique setClosure() permet de définir la fermeture d'un volet. Ainsi, on peut prévoir de commander la fermeture complète d'un volet « setclosure(100) » pour un volet communiquant en IO identifié par le RDID 31 en lien avec l'unité centrale de commande définie par l'UID 1234-5678-0000.

Selon une seconde possibilité, une commande définie de façon dynamique est réalisée, par exemple dans le cadre d'une régulation, la commande dépendant alors d'une valeur de variable d'état identifiée par exemple par la valeur v4, en appliquant par exemple une règle de calcul correspondant à un pourcentage de fermeture correspondant à (v4-20)*20 pour un volet communiquant en IO identifié par le RDID 32 en lien avec l'unité centrale de commande définie par l'UID 1234-5678-0000.

Dans ces deux cas, au lieu de retourner une valeur vrai/faux comme dans isConditionVerified(), un envoi de commande bas-niveau est généré.

Lors de la quatrième sous-étape de génération ETES5d, il est possible à partir des règles de conversion de commande CCR, de déterminer que la commande générique setClosure(p) se traduit en return createActivateFunc(p*51200).

Ainsi, le code suivant peut être généré :
- Selon le premier exemple :
   *return createRawCommand( "**io**", "**31**", (function(p1) **return createActivateFunc(p1*51200)** end)(100));*
- Selon le second exemple :
   *return createRawCommand( "**io**", "**32**", (function(p1) **return createActivateFunc(p1*51200)** end)(**(v2-20)*****20**));*

Le contenu de createRawCommand(protocol,address,raw_parameters) est spécifique en fonction du protocole domotique.

Le code retourne une commande de bas niveau RC a exécuter.

Une fois l'étape de génération ETES5 effectuée, deux étapes peuvent être réalisées sélectivement, suivant que l'exécution doit être réalisée sur le serveur Sv ou sur une unité centrale de commande U d'une installation domotique. Il est à noter que dans les différents cas, la fonction ou module de code logiciel conditionnel CCM est générée par le Serveur Sv.

Dans le premier cas, une étape d'enregistrement ETES61 du module de code logiciel conditionnel CCM sur l'unité de gestion Sv en vue de son exécution sur ladite unité de gestion Sv est réalisée.

Dans le second cas, une étape d'envoi ETES62 du module de code logiciel conditionnel CCM est ensuite effectuée à destination de l'unité centrale de commande U d'une installation domotique 17 qui le reçoit dans une étape ETU62 en vue de son exécution sur ladite unité centrale de commande U.

Alternativement, il est également possible que seule une partie du module de code logiciel conditionnel CCM soit interprétée sur l'unité centrale de commande qui retourne une valeur au serveur Sv, le Serveur Sv interprétant, par l'intermédiaire du service d'exécution ou d'un autre processus, une autre partie du module de code logiciel conditionnel CCM.

Ceci peut notamment être le cas lorsque l'expression conditionnelle générique GCE et le module de code logiciel conditionnel CCM définissent un appel à des commandes.

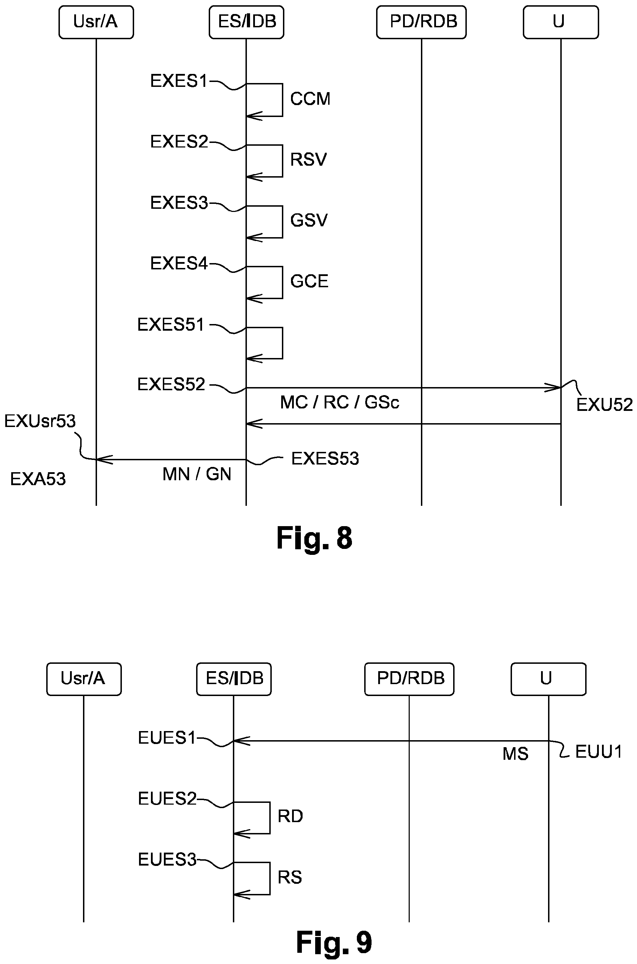

Un procédé de contrôle basé sur un module de code logiciel conditionnel CCM générée dans le procédé de génération décrit ci-dessus va à présent être décrit en référence à la figure 8, dans un premier cas où l'exécution est réalisée sur le Serveur Sv.

Dans une étape préalable non représentée sur la figure, un chargement du module de code logiciel conditionnel CCM est réalisé dans une machine virtuelle, si le code logiciel conditionnel CMM est exprimé sous forme de fragment de code précompilé, ou un déclenchement de l'exécution du module logiciel interpréteur IM est réalisé, si le code logiciel conditionnel CMM est exprimé sous forme de fragment de code en langage de programmation interprétable, ce module de code logiciel conditionnel CCM correspondant à une expression conditionnelle générique GCE.

Dans une première étape EXES1, un déclenchement de l'exécution du procédé est réalisé soit de manière périodique à l'expiration d'un compteur de temps, ou encore sur la détection d'un évènement du type changement de valeur d'une des variables de bas niveau RS.

Dans une seconde étape EXES2, les valeurs des variables de bas niveau identifiées dans le module de code logiciel conditionnel CCM sont collectées. Dans le cas d'une exécution sur le Serveur Sv, l'implémentation de la fonction de collecte des valeurs, à savoir dans l'implémentation précédemment présentée la fonction « fetchRawValue », utilise la base de données d'instances IDB pour obtenir les valeurs RSV des variables d'état de bas-niveau RS souhaitées. Nous décrirons ultérieurement le mécanisme de mise à jour de cette base.

Comme indiqué précédemment, les valeurs RSV peuvent être stockées dans la base IDB. La fonction « fetchRawValue » présente dans ses paramètres des éléments d'identifications, à savoir notamment l'identifiant RSID, le type de protocole utilisé RDPT, ces éléments d'identification pouvant être complétés par l'indication de l'identifiant de l'unité électronique de commande UID qui peut être défini comme variable locale ou globale.

Il est ainsi possible de déterminer une valeur de la clé d'indexation de bas-niveau RDK pour retrouver l'instance de modèle de dispositif de bas-niveau souhaitée, puis la valeur RSV de variable d'état de bas-niveau RS en utilisant l'identifiant de variable d'état de bas niveau RSID.

Dans une troisième étape EXES3, une conversion des valeurs RSV des variables d'état de bas niveau RS en valeurs GSV de variables d'état génériques GS sur est réalisée sur la base des règles de conversion d'état SCR portant sur des variables d'état de bas-niveau, ces règles étant intégrées dans le module de code logiciel conditionnel CCM sous forme de fragment de code, comme décrit précédemment ;

Dans une quatrième étape EXES4, une évaluation de l'expression conditionnelle générique GCE est réalisée ;

Suite à l'évaluation de l'expression conditionnelle générique GCE, l'interprétation du module de code logiciel conditionnel CCM peut donner lieu aux étapes suivantes :
- Evaluation EXES51 d'un résultat qui correspond au résultat de l'expression conditionnelle générique GCE et décision d'exécuter ou non l'action ;puis, si la condition définie est satisfaite :
- Envoi EXES52 d'un message de commande MC à destination de l'unité centrale de commande U qui le reçoit dans une étape EXU52 correspondant à au moins une commande de bas niveau RC correspondant à au moins une commande générique GC définie dans l'expression conditionnelle générique GCE sur la base d'au moins une règle de conversion de commande CCR; ou encore envoi d'un message de déclenchement d'un scénario générique GSc ou d'un groupe de commandes éventuellement traduites préalablement en commandes de bas-niveau RC et communiquées à l'unité centrale de commande U, et identifié par un identifiant de groupe de commande ou de scénario et/ou
- Envoi EXES53 d'au moins une notification GN sous forme d'un message de notification MN à un utilisateur Usr qui reçoit ce message dans une étape EXUsr53 ou d'une application A qui la reçoit dans une étape EXA53.

Selon une variante du procédé décrit ci-dessus, dans le cas de l'envoi d'une commande de bas niveau RC correspondant à une commande de haut niveau, il est possible que la conversion de la commande générique GC ne soit pas réalisée lors du procédé de génération. Dans ce cas, un procédé de commande prenant en compte cette conversion peut être utilisé, qui sera détaillé ultérieurement.

Il est à noter que dans le cas d'une exécution sur le serveur Sv pour le procédé de contrôle décrit ci-dessus, il convient que la base de donnée IDB soit mise à jour avec les valeurs effectives des variables d'état de bas-niveau RS.

Un exemple de procédé de mise à jour de cette base est détaillé ci-dessous en référence à la figure 9. Comme précédemment, nous supposerons que le procédé de mise à jour est réalisé postérieurement au procédé de configuration précédemment décrit. Ainsi, les instances de modèles de dispositif de bas-niveau RD, et les instances de modèles de dispositif génériques GD sont stockées dans une base de données d'instances IDB accessible au service d'exécution ES, comme nous l'avons précédemment décrit.

Dans un premier temps, le procédé comprend une étape de réception EUES1 d'un message de notification d'état MS émis lors d'une étape EUU1 par une unité centrale de commande U d'une installation domotique 17. Le message de notification d'état MS contient une indication concernant une variable d'état de bas niveau RS d'un dispositif domotique D. Le message MS peut contenir un identifiant de protocole RDPT, une adresse du dispositif dans le protocole RDID, un identifiant de la variable d'état concernée RSID et la nouvelle valeur RSV de la variable d'état RS.

Le procédé comprend ensuite une étape de détermination EUES2 de l'au moins une instance de modèle de dispositif de bas-niveau RD représentant le dispositif domotique D. Cette détermination peut notamment être réalisée en utilisant le contenu du message de notification d'état MS et/ou en identifiant l'émetteur de ce message, dans cet exemple l'unité centrale de commande U.

En particulier, il convient soit d'utiliser une clé d'indexation RDK déjà présente dans le message, soit, si cette clé n'est pas présente, d'identifier les éléments d'identification permettant de déterminer cette clé RDK qui sera ensuite utilisée pour sélectionner l'instance de dispositif de modèle de bas-niveau RD dans la base de donnée IDB, par exemple dans la table RDTbl décrite précédemment.

Les éléments d'identification sont soit contenus explicitement dans le message de notification MS en provenance de l'unité centrale de commande U, si ce message comporte des champs dédiés pour l'identification des entités source et destination du message ; soit déduits lors de la réception du message de notification MS. A titre d'exemple, une unité centrale de commande peut être identifiée par : son adresse IP, par le n° de port TCP ou la combinaison de ces deux éléments (adresse IP, port TCP, c'est-à-dire l'identifiant d'un socket pour une connexion Internet) ; ou encore par l'identifiant logique d'un canal de communication établi entre l'unité centrale de commande U et le serveur Sv. Une fois l'instance de dispositif de modèle de bas niveau RD identifiée, une étape de mise à jour EUES3 de la variable d'état de bas niveau RS dans la base de données IDB est réalisée.

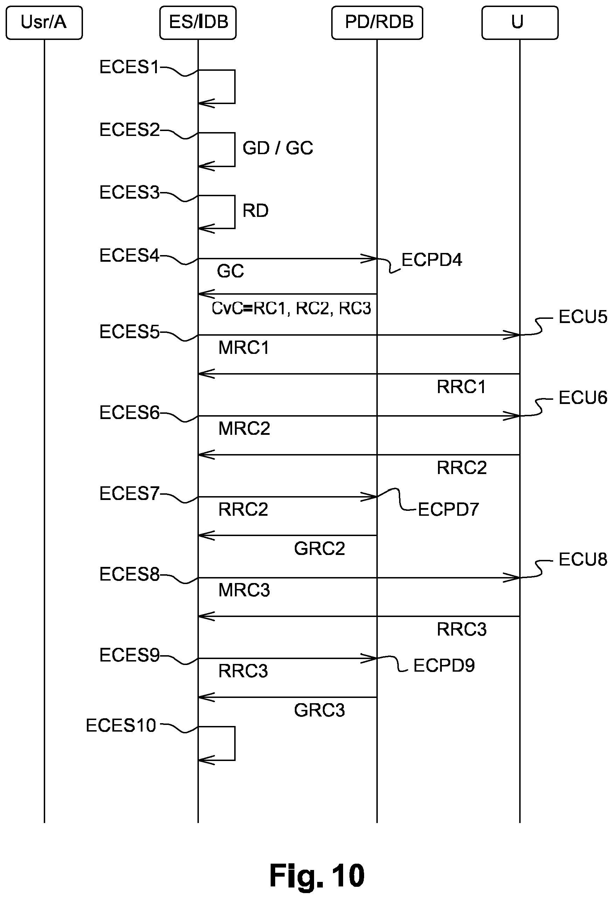

Comme nous l'avons évoqué précédemment, notamment dans le cas où l'interprétation et l'exécution du module de code logiciel conditionnel CCM renvoie un résultat sans déclencher de commande, il est possible d'initier postérieurement un procédé de commande qui effectue la conversion d'au moins une commande générique GC en au moins une commande de bas-niveau RC. Un tel procédé de commande d'au moins une installation domotique 17 d'un bâtiment 1 exécuté par un serveur Sv connecté à l'au moins une installation domotique 17 va être à présent décrit en référence à la figure 10. Ce procédé peut être exécuté par exemple par un processus ou service d'exécution ES utilisant les fonctions d'un ou de plusieurs pilotes d'exécution PD tels que décrits ci-dessus.

Ce procédé comprend une étape initiale correspondant à la réception ECES1 du résultat de l'évaluation d'une expression conditionnelle générique comprenant une commande générique GC à exécuter relative à un dispositif domotique D.

Une étape de détermination ECES2 de l'au moins une instance de modèle de dispositif générique GD représentant le dispositif domotique D est ensuite réalisée, notamment en utilisant l'identifiant unique GDURL du dispositif générique GD qui fait office de clé d'indexation et qui regroupe les éléments d'identification nécessaires correspondant à une instance unique de modèle de dispositif générique GD. Cet identifiant peut être inclus dans le message de commande MC. Une fois l'étape ECES2 réalisée, le procédé comprend une étape de détermination ECES3 de l'au moins une instance de modèle de dispositif de bas-niveau RD correspondant à l'au moins une instance de modèle générique GD déterminé à l'étape précédente. Les instances de modèles de dispositif de bas-niveau RD, et les instances de modèles de dispositif génériques GD sont stockées dans une base de données d'instances IDB accessible au service d'exécution ES. Ainsi, les étapes ECES2 et ECES3 peuvent être réalisées en consultant ladite base IDB.

Une étape de conversion ECES4 d'une ou plusieurs commandes génériques GC de l'au moins une instance de modèle de dispositif générique GD déterminée à l'étape ECES2 en au moins une commande de bas-niveau RC de l'instance de modèle de dispositif de bas niveau RD déterminée à l'étape ECES3 est ensuite réalisée. Cette étape est effectuée en particulier par un appel au pilote de protocole PD qui possède une base de règles de conversion de commande en fonction des types de modèles de dispositif génériques GD et de modèles de dispositif de bas-niveau RD utilisés. Le pilote de protocole effectue à cet effet une étape de sélection de règle de conversion dans la base de règles de conversion RDB dans une étape ECPD4, puis retourne une conversion de commande CvC correspondant à une commande de bas niveau RC à exécuter ou une pluralité de commandes de bas niveau RC1, RC2, RC3 à exécuter. Par la suite, l'exécution de la commande peut être réalisée. La figure 10 correspond à un cas où la conversion d'au moins une commande générique GC applicable à l'au moins une instance du modèle de dispositif générique GD correspond à une pluralité de commande de bas niveau RC1, RC2, RC3, correspondant l'exécution d'une combinaison d'une pluralité de commandes réelles C sur le dispositif domotique D. Dans un tel cas, la correspondance entre les commandes de haut-niveau GC et les commandes de bas niveau RC associées sont gardées en mémoire pour une gestion d'erreur appropriée. En particulier le service d'exécution ES peut mettre en œuvre un automate à états à cette fin.

Ainsi, dans une étape ECES5, une première commande RC1 est envoyée à destination de l'unité centrale U de l'installation domotique 17 en vue de l'exécution de la commande par le dispositif D, dans un premier message de commande de bas-niveau MRC1. Dans l'exemple représenté, nous supposons que le retour de cette première commande correspond à un succès de la commande avec un code de retour RRC1, envoyé par l'unité centrale de commande U dans une étape ECU5. Le service d'exécution peut stocker un code de retour générique GRC1 correspondant à cette valeur de succès OK pour la première commande RC1.

Dans une étape ECES6, une deuxième commande RC2 est envoyée à destination de l'unité centrale U de l'installation domotique 17 en vue de l'exécution de la commande par le dispositif D, dans un deuxième message de commande de bas-niveau MRC2. Dans l'exemple représenté, nous supposons que le retour de deuxième commande correspond à un échec de la commande, avec retour d'un code de retour RRC2 présentant par exemple une valeur numérique -2 correspondant à une erreur, envoyé par l'unité centrale de commande U dans une étape ECU6.

Par la suite, le service d'exécution demande, dans une étape ECES7, une conversion du code de retour RRC2 en un code de retour générique GRC2 auprès du pilote de protocole PD qui procède à cette conversion dans une étape ECPD7. A titre d'exemple, le code d'erreur numérique -2 peut être traduit en un code de retour générique GRC2 correspondant à une erreur de type « commande non autorisée ». Le code GRC2 est stocké par le service d'exécution ES.

Dans une étape ECES8, une troisième commande RC3 est envoyée à destination de l'unité centrale U de l'installation domotique 17 en vue de l'exécution de la commande par le dispositif domotique D, dans un troisième message de commande de bas-niveau MRC3. Dans l'exemple représenté, nous supposons que le retour de troisième commande correspond à un échec de la commande, avec retour d'un code RRC3 présentant par exemple une valeur numérique -7, envoyé par l'unité centrale de commande U dans une étape ECU8.

Par la suite, le service d'exécution demande, dans une étape ECES9, une conversion du code de retour RRC3 en un code de retour générique GRC3 auprès du pilote de protocole PD qui procède à cette conversion dans une étape ECPD9. A titre d'exemple, le code d'erreur numérique -2 peut être traduit en un code d'erreur générique GRC3 « pas de réponse radio ». Le code GRC3 est stocké par le service d'exécution ES.

Dans une dernière étape ECES10, le service d'exécution définit une réponse à retourner.

Etant donné qu'un résultat de commande ou code de retour GRC1, GRC2, GRC3 a été reçue pour chaque commande de bas niveau RC1, RC2, RC3 exécutée, les résultats doivent être agrégés pour simuler un résultat de commande globale sur la commande générique originale. En particulier, la commande générique est considérée comme effectuée si toutes les commandes de bas niveau ont été réalisées avec succès, et non-effectuée si une ou plusieurs commande de bas niveau ont échoué.

Dans le cas illustré à la figure 10, il peut être considéré que la commande GC a échoué, et que le code de retour donné au client doit être : « commande non autorisée » et « pas de réponse radio ».

Il est à noter que le procédé de commande peut permettre le pilotage en parallèle de plusieurs produits utilisant le même protocole ou des protocoles de communication locale différents.

En particulier, il est possible dans ce cas d'appliquer les étapes suivantes :
- les commandes de bas-niveau RC applicables à un dispositif domotique D ne présentant pas de sous-ensembles fonctionnels sont exécutées séquentiellement comme décrit précédemment, c'est-à-dire qu'une nouvelle commande est envoyée seulement après la réception du code de retour correspondant à l'exécution de la commande précédente
- les commandes relatives à des dispositifs domotiques D comprenant des sous-ensembles fonctionnels ou à un groupe de dispositifs domotiques peuvent être réalisées parallèlement, c'est-à-dire que les différentes commandes sont envoyées l'une après l'autre, mais sans attendre la réception du code de retour correspondant à l'exécution des commandes précédemment envoyées, pour autant que ces commandes ne concernent pas le même sous-ensemble fonctionnel ou même dispositif dans le cadre d'un groupe, ce qui revient à un fonctionnement correspondant à des files d'attente de commande par dispositif ou par sous-ensemble fonctionnel du dispositif domotique D.

Ces dispositions permettent de paralléliser le traitement des commandes sur des dispositifs distincts ou sur des sous-ensembles fonctionnels d'un même dispositif domotique, de façon à diminuer le temps de traitement de commandes génériques destinées à plusieurs dispositifs domotique distincts ou à des sous-ensembles fonctionnels d'un même dispositif domotique.

Ces dispositions sont particulièrement adaptées pour le suivi de commande longue. A titre d'exemple, considérons un ensemble de dispositifs domotiques formé par un ensemble de 10 volets roulants communiquant selon un protocole bidirectionnel, par exemple du type IO homecontrol communiquant une information d'atteinte de la position souhaitée en retour, chaque volet pouvant parcourir la course souhaitée en 30 secondes. Un traitement séquentiel occasionnera une réalisation de la commande en 5 minutes, alors qu'un traitement en parallèle permettra une réalisation de la commande et un retour au bout de 30 secondes.

Nous avons décrit ci-dessus un procédé de contrôle exécuté sur le serveur Sv, ainsi qu'un procédé de mise à jour et un procédé de commande également exécutés sur le serveur Sv.

Dans les exemples décrits ci-dessus, les opérations de détermination des instances de dispositifs et des variables d'état, ainsi que les opérations de sélection des règles de conversion sont effectuées par les pilotes de protocole PD qui utilisent chacun des tables de conversion spécifiques à un protocole de communication local déterminé. Conformément à d'autres modes de réalisation, les tables de conversion peuvent contenir des données concernant plusieurs protocoles de bas niveau et une seule entité peut réaliser lesdites opérations, soit sous forme d'un pilote de protocole unique, soit sous la forme d'un service d'exécution qui centralise les traitements. Dans ce cas, l'identifiant du protocole de bas niveau RDPT est utilisé comme élément de sélection supplémentaire dans ces structures de données.

Nous allons à présent décrire un procédé de contrôle qui est exécuté sur une unité centrale de commande d'une installation domotique.

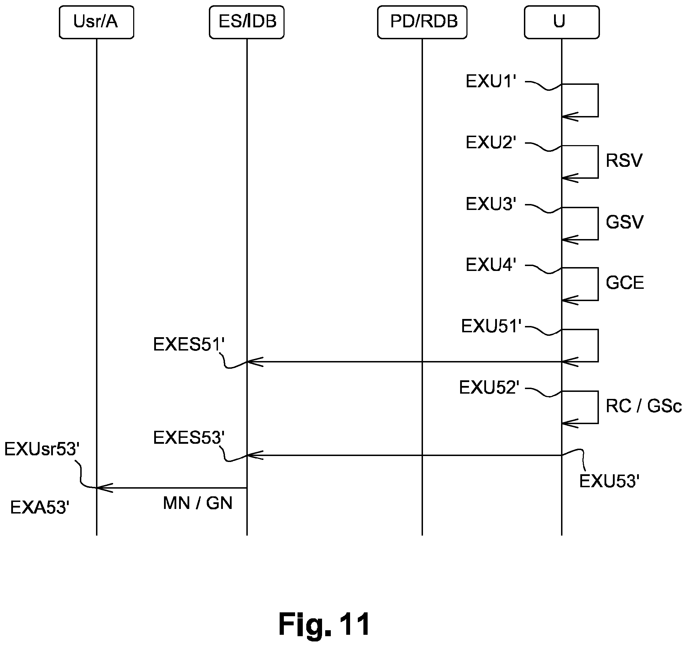

Un tel procédé de contrôle basé sur un module de code logiciel conditionnel CCM généré dans le procédé de génération décrit ci-dessus va à présent être décrit en référence à la figure 11, dans un second cas où l'exécution est réalisée sur une unité centrale de commande U. Il convient dans ce cas qu'un module logiciel complémentaire, dit module interpréteur IM, soit présent sur l'unité centrale de commande U, pour permettre l'exécution du module de code logiciel conditionnel CCM. Il est préférable que le même langage interprétable soit implémenté pour la génération par le serveur Sv et pour l'exécution du module de code sur l'unité centrale de commande U ou sur le serveur Sv.

Dans une étape préalable non représentée, le déclenchement de l'exécution du module logiciel interpréteur est réalisé pour interpréter le code logiciel conditionnel CCM.

Alternativement, dans le cas d'un module de code logiciel conditionnel CCM exprimé sous forme de code précompilé pour une machine virtuelle VM, il convient qu'une telle machine virtuelle soit présente sur l'unité centrale de commande U. Dans une étape préalable non représentée, un chargement du module de code logiciel conditionnel CCM dans la machine virtuelle est réalisé, ce module de code logiciel conditionnel CCM correspondant à une expression conditionnelle générique GCE.

Dans une première étape EXU1', un déclenchement de l'exécution du procédé est réalisé soit de manière périodique à l'expiration d'un compteur de temps, ou encore sur la détection d'un évènement du type changement de valeur d'une des variables de bas niveau RS.

Dans une seconde étape EXU2', les valeurs des variables de bas niveau identifiées dans le module de code logiciel conditionnel CCM sont collectées. A cet effet, l'unité centrale de commande doit implémenter une fonction locale *fetchRawValue(protocol, deviceAddress, rawStateID)* pour retourner les valeurs RSV des variables d'états de bas niveau RS, qui sont usuellement stockés dans la mémoire de l'unité centrale de commande U.

Dans une troisième étape EXU3', une conversion des valeurs RSV des variables d'état de bas niveau RS en valeurs GSV de variables d'état génériques GS sur est réalisée sur la base des règles de conversion d'état SCR portant sur des variables d'état de bas-niveau, ces règles étant intégrées dans le module de code logiciel conditionnel CCM sous forme de fragment de code, comme décrit précédemment ;

Dans une quatrième étape EXU4', une évaluation de l'expression conditionnelle générique GCE est réalisée ;

Suite à l'évaluation de l'expression conditionnelle générique GCE, l'exécution du module de code logiciel conditionnel CCM peut réaliser les étapes suivantes :
- Renvoi EXU51' d'un résultat qui correspond au résultat de l'expression conditionnelle générique, localement au Serveur Sv qui peut recevoir ce résultat dans une étape EXES51' ; et/ou
- Déclenchement EXU52' d'au moins un commande de bas niveau RC correspondant à au moins une commande générique GC définie optionnellement dans l'expression conditionnelle générique GCE sur la base d'au moins une règle de conversion de commande CCR; ou encore déclenchement d'un scénario générique GSc ou d'un groupe de commandes éventuellement traduites préalablement en commandes de bas-niveau RC et communiquées à l'unité centrale de commande U, et identifié par un identifiant de groupe de commande ou de scénario ; et/ou
- Envoi EXU53' d'au moins une notification GN, notamment par l'intermédiaire du Serveur Sv dans une étape EXES53', sous forme d'un message de notification MN à un utilisateur Usr qui reçoit ce message dans une étape EXUsr53' ou d'une application A qui la reçoit dans une étape EXA53'.

La réalisation de ces étapes dépend de la définition de l'expression conditionnelle générique GCE.

Dans le cas de l'étape EXU51', dans lequel l'unité centrale de commande envoie le résultat de l'exécution de l'expression conditionnelle générique au serveur Sv, le serveur Sv peut ensuite décider de procéder à des commandes comme cela est décrit dans le procédé de commande décrit précédemment dans le cas où cette commande n'est pas directement intégrée dans le code interprétable du module de code logiciel conditionnel CCM.

Dans le cas de l'étape EXU52', l'unité centrale de commande U interprète le résultat et déclenche l'exécution de la ou des commandes réelles, en envoyant aux dispositifs domotiques concernés des messages de commande de bas-niveau RC conformément au protocole local. Dans ce cas, il est possible de réaliser l'ensemble de l'exécution suite à l'évaluation de l'expression conditionnelle générique même si le lien avec le Serveur Sv est interrompu.

## Revendications

1. Procédé de génération d'un module de code logiciel conditionnel (CCM) destiné au contrôle d'au moins une installation domotique (17) d'un bâtiment (1), l'installation domotique (17) comprenant une pluralité de dispositifs domotiques (D), chaque dispositif domotique (D) étant représenté par au moins une instance de modèle de dispositif générique (GD) et au moins une instance de modèle de dispositif de bas niveau (RD) ; le procédé étant exécuté par une unité de gestion (Sv) connectée à l'au moins une installation domotique (17) et comprenant les étapes suivantes :
i. Réception (ETES1) d'un message de génération (MG) ou d'une instruction de génération d'un module de code logiciel conditionnel (CCM) en provenance d'un utilisateur (Usr) ou d'une application (A) s'exécutant sur l'unité de gestion (Sv) ou sur une autre unité de gestion connectée, le message de génération (MG) contenant une expression conditionnelle générique (GCE) définissant au moins une évaluation de condition portant sur au moins une variable d'état générique (GS) d'au moins un dispositif domotique (D) et optionnellement au moins un déclenchement conditionnel d'au moins une action (GC, GN, GSc);
ii. Détermination (ETES2) de l'au moins une instance de modèle de dispositif générique (GD) représentant l'au moins un dispositif domotique (D) ;
iii. Détermination (ETES3) de l'au moins une instance de modèle de dispositif de bas-niveau (RD) correspondant à l'au moins une instance de modèle de dispositif générique (GD) déterminée à l'étape ii ;
iv. Détermination d'au moins une variable de bas niveau (RS) et d'au moins un type (RSID) de variable d'état de bas niveau (RS) correspondant à l'au moins une variable d'état générique (GS) et à l'instance de modèle de dispositif de bas niveau (RD) déterminée à l'étape iii ou à un type de dispositif de bas-niveau (RDT),
v. Sélection d'une règle de conversion d'état (SCR) agencée pour convertir une valeur (RSV) de l'au moins une variable d'état de bas niveau (RS) en au moins une valeur (GSV) de l'au moins une variable d'état générique (GS) en fonction de l'au moins une variable d'état de bas-niveau (RS) ou de son type (RSID), la règle de conversion étant exprimée sous forme de fragment de code logiciel ;.
vi. Génération (ETES5) d'un module de code logiciel conditionnel (CCM) comprenant les sous-étapes suivantes :
a.génération (ETES5a) d'au moins un premier fragment de code logiciel (CFa) pour la collecte des valeurs (RSV) de variables d'état de bas niveau (RS) nécessaires à l'évaluation de l'expression conditionnelle générique (GCE) sur la base de l'au moins un type (RSID) de variable d'état de bas-niveau (RS) déterminé à l'étape iv pour l'au moins une instance de modèle de dispositif de bas-niveau (RD) déterminée à l'étape iii ;
b. génération (ETES5b) d'au moins un deuxième fragment de code logiciel (CFb) pour la conversion de l'au moins une valeur (RSV) de l'au moins une variable d'état de bas niveau (RS) nécessaire à l'évaluation de l'expression conditionnelle générique (GCE) en au moins une valeur (GSV) de variable d'état générique (GS) sur la base de l'au moins une règle de conversion d'état (SCR) sélectionnée à l'étape v ;
c.définition (ETES5c) d'au moins un troisième fragment de code logiciel (CFc) pour l'évaluation de l'expression conditionnelle générique (GCE) en fonction de l'au moins une valeur (GSV) de l'au moins une variable d'état générique (GS) déterminée à l'étape v ;
vii. Une étape d'envoi (ETES62) du module de code logiciel conditionnel (CCM) comprenant les premier, deuxième et troisième fragments de code logiciel (CFa, CFb, CFc) à destination d'une unité centrale de commande (U) de l'installation domotique (17) en vue de son exécution sur ladite unité centrale de commande (U), ou une étape d'enregistrement (ETES61) du module de code logiciel conditionnel (CCM) comprenant les premier, deuxième et troisième fragments de code logiciel (CFa, CFb, CFc) sur l'unité de gestion (Sv) en vue de son exécution sur ladite unité de gestion (Sv).

2. Procédé de génération selon la revendication 1, dans lequel :
- l'au moins une action comprend une commande générique (GC) relative à un moins un dispositif domotique (D),
le procédé comprenant en outre l'étape suivante :
vbis - Sélection optionnelle (ETES4) d'une règle de conversion de commande (CCR) convertissant l'au moins une commande générique (GC) en au moins une commande de bas-niveau (RC) en fonction de l'au moins une commande générique (GC) ou de son nom (GCID) et du type de dispositif de bas-niveau (RDT) ;
et dans lequel l'étape vi de génération (ETES5) comprend en outre une sous-étape suivante :
d. génération (ETES5d) optionnelle d'au moins un quatrième fragment de code logiciel (CFd) pour la définition de commandes de bas-niveau (RC) correspondant à des commandes génériques (GC) définies dans l'expression conditionnelle générique sur la base d'une règle de conversion de commande (CCR) sélectionnée à l'étape vbis, la règle de conversion étant exprimée sous forme de fragment de code ou d'expression d'un langage interprétable, ou à l'envoi d'une notification.

3. Procédé de génération selon l'une des revendications précédentes, dans lequel au moins un fragment de code logiciel (CFa, CFb, CFc, CFd) parmi l'au moins premier, deuxième, troisième et/ou quatrième est exprimé sous forme :
- d'un fragment de code source de langage de programmation compilable ; ou
- d'un fragment de code précompilé pour une machine virtuelle implémentée sur l'unité centrale de commande (U) ou l'unité de gestion (Sv) destinée à exécuter le code logiciel conditionnel ; ou
- d'un fragment de code en langage de programmation interprétable par un module logiciel complémentaire, dit interpréteur, sur l'unité centrale de commande (U) ou l'unité de gestion (Sv) destinée à exécuter le code logiciel conditionnel ; ou
- d'un fragment de code binaire, correspondant à une suite d'instructions en langage machine compilé par l'unité de gestion (Sv) pour un processeur cible, destiné à exécuter ledit fragment de code binaire.

4. Procédé de génération selon l'une des revendications précédentes, dans lequel l'au moins un troisième fragment de code logiciel (CFc) pour l'évaluation de l'expression conditionnelle générique (GCE) comprend une copie au moins partielle d'une condition comprise dans l'expression conditionnelle générique (GCE).

5. Procédé de génération selon l'une des revendications précédentes, comprenant en outre une phase de contrôle de l'au moins une installation domotique (17) du bâtiment (1), la phase de contrôle étant exécutée par l'unité de gestion (Sv) connectée à l'au moins une installation domotique (17) ou par une unité centrale de commande (U) de l'installation domotique (17) et comprenant les étapes suivantes :
i. Déclenchement (EXES1, EXU1') de l'exécution du module de code logiciel conditionnel (CCM) agencé pour évaluer l'expression conditionnelle générique (GCE).
ii. Collecte (EXES2, EXU2') d'au moins une valeur (RSV) de variable de bas niveau (RS) identifiée dans le module de code logiciel conditionnel (CCM).
iii. Conversion (EXES3, EXU3') de l'au moins une valeur (RSV) de variable d'état de bas niveau (RS) en au moins une valeur (GSV) de variable d'état générique (GS) sur la base d'au moins une règle de conversion d'état (SCR) intégrée dans le module de code logiciel conditionnel (CCM) sous forme de fragment de code ;
iv. Evaluation (EXES4, EXU4') de l'expression conditionnelle générique (GCE) sur la base de l'au moins une valeur (GSV) de l'au moins une variable d'état générique (GS) obtenue à l'étape iii.

6. Produit programme d'ordinateur comprenant des instructions de code qui, lorsque ledit programme est exécuté par un processeur, conduisent celui-ci à mettre en œuvre les étapes d'un procédé selon l'une des revendications précédentes.

7. Système comprenant une unité de gestion (Sv) agencée pour exécuter un procédé selon l'une quelconque des revendications 1 à 5, l'unité de gestion étant connectable à une unité centrale de commande (U) d'une installation domotique.

## Patentansprüche

1. Verfahren zur Erzeugung eines Moduls mit bedingtem Softwarecode (CCM), das zur Steuerung mindestens einer Heimautomatisierungsanlage (17) eines Gebäudes (1) bestimmt ist, wobei die Heimautomatisierungsanlage (17) eine Vielzahl von Heimautomatisierungsvorrichtungen (D) umfasst, wobei jede Heimautomatisierungsvorrichtung (D) durch mindestens eine Modellinstanz einer generischen Vorrichtung (GD) und mindestens eine Modellinstanz einer Vorrichtung mit niedriger Einstufung (RD) dargestellt ist; wobei das Verfahren durch eine Verwaltungseinheit (Sv) ausgeführt wird, die an die mindestens eine Heimautomatisierungsanlage (17) angeschlossen ist, und die folgenden Schritte umfasst:
i. Empfangen (ETES1) einer Erzeugungsnachricht (MG) oder einer Anweisung zur Erzeugung eines Moduls mit bedingtem Softwarecode (CCM) von einem Nutzer (Usr) oder einer Anwendung (A), die in der Verwaltungseinheit (Sv) oder einer anderen angeschlossenen Verwaltungseinheit ausgeführt wird, wobei die Erzeugungsnachricht (MG) einen bedingten generischen Ausdruck (GCE) enthält, der mindestens eine Bedingungsbewertung definiert, die sich auf mindestens eine generische Zustandsvariable (GS) mindestens einer Heimautomatisierungsvorrichtung (D) und optional mindestens eine bedingte Auslösung mindestens einer Aktion (GC, GN, GSc) bezieht;
ii. Bestimmen (ETES2) der mindestens einen Modellinstanz einer generischen Vorrichtung (GD), die die mindestens eine Heimautomatisierungsvorrichtung (D) darstellt;
iii. Bestimmen (ETES3) der mindesten einen Modellinstanz einer Vorrichtung mit niedriger Einstufung (RD), die der mindestens einen im Schritt ii. bestimmten Modellinstanz einer generischen Vorrichtung (GD) entspricht;
iv. Bestimmen mindestens einer Variablen mit niedriger Einstufung (RS) und mindestens eines Typs (RSID) einer Zustandsvariablen mit niedriger Einstufung (RS), die der mindestens einen generischen Zustandsvariable (GS) und der Modellinstanz einer Vorrichtung mit niedriger Einstufung (RD), die in Schritt iii. bestimmt wird, oder einem Vorrichtungstyp mit niedriger Einstufung (RDT) entspricht;
v. Auswählen einer Zustandsumwandlungsregel (SCR), die angeordnet ist, um einen Wert (RSV) der mindestens einen Zustandsvariablen mit niedriger Einstufung (RS) in mindestens einen Wert (GSV) der mindestens einen generischen Zustandsvariable (GS) in Abhängigkeit von der mindestens einen Zustandsvariablen mit niedriger Einstufung (RS) oder ihres Typs (RSID) umzuwandeln, wobei die Umwandlungsregel in Form eines Softwarecodefragments ausgedrückt wird;
vi. Erzeugen (ETES5) eines Moduls mit bedingtem Softwarecode (CCM), die folgenden Unterschritte umfassend:
a. Erzeugen (ETES5a) mindestens eines ersten Softwarecodefragments (CFa) zum Sammeln der Werte (RSV) von Zustandsvariablen mit niedriger Einstufung (RS), die für die Bewertung des bedingten generischen Ausdrucks (GCE) auf der Basis des mindestens einen in Schritt iv. bestimmten Typs (RSID) einer Zustandsvariablen mit niedriger Einstufung (RS) für mindestens eine in Schritt iii. bestimmte Modellinstanz einer Vorrichtung mit niedriger Einstufung (RD) nötig sind;
b. Erzeugen (ETES5b) mindestens eines zweiten Softwarecodefragments (CFb) zum Umwandeln des mindestens einen Werts (RSV) der mindestens einen Zustandsvariablen mit niedriger Einstufung (RS), die zur Bewertung des bedingten generischen Ausdrucks (GCE) nötig ist, in mindestens einen Wert (GSV) einer generischen Zustandsvariable (GS) auf der Basis der mindestens einen in dem Schritt v. ausgewählten Zustandsumwandlungsregel (SCR);
c. Definieren (ETES5c) mindestens eines dritten Softwarecodefragments (CFc) zur Bewertung des bedingten generischen Ausdrucks (GCE) in Abhängigkeit von dem mindestens einen Wert (GSV) der mindestens einen in dem Schritt v. bestimmten generischen Zustandsvariable (GS);
vii. einen Schritt zum Senden (ETES62) des Moduls mit bedingtem Softwarecode (CCM), das erste, zweite und dritte Softwarecodefragment (CFa, CFb, CFc) umfassend, zu einer zentralen Steuerungseinheit (U) der Heimautomatisierungsanlage (17) in Hinblick auf dessen Ausführung in der zentralen Steuerungseinheit (U), oder
einen Schritt des Speicherns (ETES61) des Moduls mit bedingtem Softwarecode (CCM), das erste, zweite und dritte Softwarecodefragment (CFa, CFb, CFc) umfassend, in der Verwaltungseinheit (Sv) in Hinblick auf dessen Ausführung in der Verwaltungseinheit (Sv).

2. Verfahren zur Erzeugung nach Anspruch 1, wobei:
- die mindestens eine Aktion eine generische Steuerung (GC) in Bezug auf mindestens eine Heimautomatisierungsvorrichtung (D) umfasst,
wobei das Verfahren weiter den folgenden Schritt umfasst:
vbis - optionales Auswählen (ETES4) einer Steuerungsumwandlungsregel (CCR), die die mindestens eine generische Steuerung (GC) in mindestens eine Steuerung mit niedriger Einstufung (RC) in Abhängigkeit von der mindestens einen generischen Steuerung (GC) oder von ihrem Namen (GCID) und vom Vorrichtungstyp mit niedriger Einstufung (RDT) umwandelt;
und wobei der Schritt vi des Erzeugens (ETES5) weiter einen folgenden Unterschritt umfasst:
d. optionales Erzeugen (ETES5d) mindestens eines vierten Softwarecodefragments (CFd) zur Definition von Steuerungen mit niedriger Einstufung (RC) entsprechend den generischen Steuerungen (GC) die in dem bedingten generischen Ausdruck auf der Basis einer Steuerungsumwandlungsregel (CCR) definiert werden, die im Schritt vbis ausgewählt wird, wobei die Umwandlungsregel in Form eines Codefragments oder eines Ausdrucks einer interpretierbaren Sprache oder beim Senden einer Benachrichtigung ausgedrückt wird.

3. Verfahren zur Erzeugung nach einem der vorstehenden Ansprüche, wobei mindestens ein Softwarecodefragment (CFa, CFb, CFc, CFd) aus dem mindestens ersten, zweiten, dritten, und/oder vierten ausgedrückt wird, in Form:
- eines Quellcodefragments einer kompilierbaren Programmiersprache; oder
- eines vorkompilierten Codefragments für eine virtuelle Maschine, die in der zentralen Steuerungseinheit (U) oder der Verwaltungseinheit (Sv) implementiert ist, die dazu bestimmt ist, den bedingten Softwarecode auszuführen; oder
- eines Codefragments einer durch ein ergänzendes Softwaremodul interpretierbaren Programmiersprache, Interpreter genannt, in der zentralen Steuerungseinheit (U) oder der Verwaltungseinheit (Sv), die dazu bestimmt ist, den bedingten Softwarecode auszuführen; oder
- eines binären Codefragments, das einer Folge von Anweisungen in Maschinensprache entspricht, das durch die Verwaltungseinheit (Sv) für einen Zielprozessor kompiliert ist, der dazu bestimmt ist, das binäre Codefragment auszuführen.

4. Verfahren zur Erzeugung nach einem der vorstehenden Ansprüche, wobei das mindestens eine dritte Softwarecodefragment (CFc) zur Bewertung des bedingten generischen Ausdrucks (GCE) mindestens eine Teilkopie einer Bedingung umfasst, die in dem bedingten generischen Ausdruck (GCE) enthalten ist.

5. Verfahren zur Erzeugung nach einem der vorstehenden Ansprüche, weiter eine Kontrollphase der mindestens einen Heimautomatisierungsanlage (17) des Gebäudes (1) umfassend, wobei die Kontrollphase durch die Verwaltungseinheit (Sv) ausgeführt wird, die an die mindestens eine Heimautomatisierungsanlage (17) angeschlossen ist, oder durch eine zentrale Steuerungseinheit (U) der Heimautomatisierungsanlage (17), und die folgenden Schritte umfassend:
i. Auslösen (EXES1, EXU1') der Ausführung des Moduls mit bedingtem Softwarecode (CCM), das angeordnet ist, um den bedingten generischen Ausdruck (GCE) zu bewerten;
ii. Sammeln (EXES2, EXU2') mindestens eines Wertes (RSV) einer Variablen mit niedriger Einstufung (RS), die in dem Modul mit bedingtem Softwarecode (CCM) identifiziert wird.
iii. Umwandeln (EXES3, EXU3') des mindestens einen Wertes (RSV) einer Zustandsvariablen mit niedriger Einstufung (RS) in mindestens einen Wert (GSV) einer generischen Zustandsvariable (GS) auf der Basis mindestens einer Zustandsumwandlungsregel (SCR), die in dem Modul mit bedingtem Softwarecode (CCM) in Form eines Codefragments integriert ist;
iv. Bewerten (EXES4, EXU4') des bedingten generischen Ausdrucks (GCE) auf der Basis des mindestens einen Wertes (GSV) der mindestens einen im Schritt iii. erhaltenen generischen Zustandsvariablen (GS).

6. Computerprogrammprodukt, das Codeanweisungen umfasst, die, wenn das Programm durch einen Prozessor ausgeführt wird, diesen dazu bringen, die Schritte eines Verfahrens nach einem der vorstehenden Ansprüche umzusetzen.

7. System, eine Verwaltungseinheit (Sv) umfassend, die angeordnet ist, um ein Verfahren nach einem der Ansprüche 1 bis 5 auszuführen, wobei die Verwaltungseinheit an eine zentrale Steuerungseinheit (U) einer Heimautomatisierungsanlage angeschlossen werden kann.

## Claims

1. A method for generating a conditional software code module (CCM) intended for the monitoring of at least one home automation installation (17) of a building (1), the home automation installation (17) comprising a plurality of home automation devices (D), each home automation device (D) being represented by at least one generic device model instance (GD) and at least one low-level device model instance (RD); the method being performed by a management unit (Sv) connected to the at least one home automation installation (17) and comprising the following steps of:
i. Receiving (ETES1) a generation message (MG) or a generation instruction of a conditional software code module (CCM) from a user (Usr) or an application (A) executed on the management unit (Sv) or on another connected management unit, the generation message (MG) containing a generic conditional expression (GCE) defining at least one evaluation of condition relating to at least one generic state variable (GS) of at least one home automation device (D) and optionally at least one conditional triggering of at least one action (GC, GN, GSc);
ii. Determining (ETES2) the at least one generic device model instance (GD) representing the at least one home automation device (D);
iii. Determining (ETES3) the at least one low-level device model instance (RD) corresponding to the at least one generic device model instance (GD) determined in step ii;
iv. Determining at least one low-level variable (RS) or at least one type (RSID) of low-level state variable (RS) corresponding to the at least one generic state variable (GS) and to the low-level device model instance (RD) determined in step iii or to a type of low-level device (RDT),
v. Selecting a state conversion rule (SCR) arranged to convert a value (RSV) of the at least one low-level state variable (RS) into at least one value (GSV) of the at least one generic state variable (GS) as a function of the at least one low-level state variable (RS) or of its type (RSID), the conversion rule being expressed in the form of software code snippet;
vi. Generating (ETES5) a conditional software code module (CCM) comprising the following sub-steps:
a. generating (ETES5a) at least one first software code snippet (CFa) for the collection of the values (RSV) of low-level state variables (RS) necessary for the evaluation of the generic conditional expression (GCE) based on at least one type (RSID) of low-level state variable (RS) determined in step iv for the at least one low-level device model instance (RD) determined in step iii;
b. generating (ETES5b) at least one second software code snippet (CFb) for the conversion of the at least one value (RSV) of the at least one low-level state variable (RS) necessary for the evaluation of the generic conditional expression (GCE) into at least one value (GSV) of generic state variable (GS) based on the at least one state conversion rule (SCR) selected in step v;
c. defining (ETES5c) at least one third software code snippet (CFc) for the evaluation of the generic conditional expression (GCE) as a function of the at least one value (GSV) of the at least one generic state variable (GS) determined in step v;
vii. A step of sending (ETES62) the conditional software code module (CCM) comprising the first, second and third software code snippets (CFa, CFb, CFc) to the central control unit (U) of a home automation installation (17) with a view to its execution on said central control unit (U), or
a recording step (ETES61) of the conditional software code module (CCM) comprising the first, second and third software code snippets (CFa, CFb, CFc) on the management unit (Sv) with a view to its execution on said management unit (Sv).

2. The generation method according to claim 1, wherein:
- the at least one action comprises a generic command (GC) relating to a least one home automation device (D),
the method further comprising the following step:
vbis - Optional selection (ETES4) of a command conversion rule (CCR) converting the at least one generic command (GC) into at least one low-level command (RC) as a function of the at least one generic command (GC) or of its name (GCID) and of the low-level device type (RDT);
and wherein the generation step vi (ETES5) further comprises the following sub-step of:
d. optionally generating (ETES5d) at least one fourth software code snippet (CFd) for the definition of low-level commands (RC) corresponding to generic commands (GC) defined in the generic conditional expression based on a command conversion rule (CCR) selected in the step vbis, the conversion rule is expressed as a code snippet or expression of an interpretable language, or upon sending a notification.

3. The generation method according to any of the preceding claims, wherein at least one software code snippet (CFa, CFb, CFc, CFd) among the at least first, second, third and/or fourth is expressed as:
- a source code snippet of compilable programming language; or
- a precompiled code snippet for a virtual machine implemented on the central control unit (U) or the management unit (Sv) intended to execute the conditional software code; or
- a code snippet of programming language interpretable by a complementary software module, called the interpreter, on the central control unit (U) or the management unit (Sv) intended to execute the conditional software code; or
- a binary code snippet, corresponding to a sequence of machine language instructions compiled by the management unit (Sv) for a target processor, intended to execute said binary code snippet.

4. The generation method according to any of the preceding claims, wherein the at least one third software code snippet (CFc) for the evaluation of the generic conditional expression (GCE) comprises an at least partial copy of a condition comprised in the generic conditional expression (GCE).

5. The generation method according to any of the preceding claims, further comprising a control phase of at least one home automation installation (17) of the building (1), the control phase being executed by the management unit (Sv) connected to at least one home automation installation (17) or by a central control unit (U) of the home automation installation (17) and comprising the following steps of:
i. Triggering (EXES1, EXU1') the execution of a conditional software code module (CCM) arranged to evaluate a generic conditional expression (GCE).
ii. Collecting (EXES2, EXU2') at least one value (RSV) of low-level variable (RS) identified in the conditional software code module (CCM).
iii. Converting (EXES3, EXU3') the at least one value (RSV) of low-level state variable (RS) into at least one value (GSV) of generic state variable (GS) based on at least one state conversion rule (SCR) integrated in the conditional software code module (CCM) as a code snippet;
iv. Evaluating (EXES4, EXU4') the generic conditional expression (CGE) based on at least one value (GSV) of the at least one generic state variable (GS) obtained in step iii.

6. A computer program product comprising code instructions which, when said program is executed by a processor, lead the latter to implement the steps of a method according to any of the preceding claims.

7. A system comprising a management unit (Sv) arranged to execute a method according to any one of claims 1 to 5, the management unit being connectable to a central control unit (U) of a home automation installation.
